# EUROPEAN PATENT APPLICATION

(11) **EP 4 708 285 A1**
(43) Date of publication of application: **11.03.2026**
(21) Application number: 24835095.1
(22) Date of filing: 03.04.2024
(51) Int. Cl.: G10L 15/20, G10L 21/0272

(54) **MODEL DETERMINATION METHOD, MODEL APPLICATION METHOD, AND RELATED DEVICE**

(30) Priority: 06.07.2023 CN 202310824944
(71) Applicant: Tencent Technology (Shenzhen) Company Limited, Shenzhen, Guangdong 518057 (CN)
(72) Inventor: FENG, Xin, Shenzhen, Guangdong 518057 (CN)
(74) Representative: EP&C
(86) International application number: PCT/CN2024/085733
(87) International publication number: WO 2025/007610

(57) **Abstract**

Embodiments of the present application disclose a model determination method, a model application method, and a related device. An initial voice separation model comprises an initial number determination module used for analyzing the number of voice producing objects, and an initial voice separation module used for performing voice separation on the basis of the number of voice producing objects determined by the initial number determination module, and sample voice information only needs to be inputted, so that a voice separation result can be obtained by means of separation by the model. On the basis of the difference between an accurate voice separation result corresponding to the sample voice information and a model output, the accuracy of the model for analysis of the number of the voice producing objects and the accuracy of the model for the separation of the voice information can be reflected. Therefore, parameter adjustment is performed on the initial voice separation model on the basis of the difference, so that the model can learn at the same time how to accurately analyze the number of the voice producing objects and accurately separate the voice information, the obtained voice separation model can realize accurate voice separation without other information input than voice information to be separated, thereby improving the voice separation efficiency.

## Description

This application claims priority to Chinese Patent Application No. 202310824944.X, filed with the China National Intellectual Property Administration on July 6, 2023 and entitled "MODEL DETERMINING METHOD, MODEL APPLICATION METHOD, AND RELATED DEVICE", which is incorporated herein by reference in its entirety.

### FIELD OF THE TECHNOLOGY

This application relates to the field of machine learning technologies, and in particular, to model determining and model application technologies.

### BACKGROUND OF THE DISCLOSURE

Voice recognition is one of main fields of model application. An object corresponding to voice information can be recognized by using a voice recognition model. In some scenarios, because there are many people simultaneously speaking, collected voice information may include voice information of a plurality of objects. In this case, the voice information of the plurality of objects needs to be separated by using a voice separation model, to accurately perform voice recognition on voice information of each object.

In the related art, when the voice separation model is applied, a quantity of speaking objects included in to-be-separated voice information needs to be determined in advance, and then the voice separation model can obtain an accurate voice separation result. Therefore, in the related art, before the to-be-separated voice information is inputted to the voice separation model, a quantity of objects corresponding to the voice information needs to be determined first.

Therefore, a voice separation process in the related art is complex, and has a high requirement on an information input side, and it is difficult to implement efficient and concise voice information separation.

### SUMMARY

To resolve the foregoing technical problem, this application provides a model determining method. A model obtained through training by using the method has a capability of automatically recognizing a quantity of speaking objects corresponding to to-be-separated voice information, and can automatically separate, based on the quantity of speaking objects, a plurality of pieces of voice sub-information corresponding to the to-be-separated voice information, without preprocessing the to-be-separated voice information. Therefore, efficiency and convenience in voice separation are improved.

Embodiments of this application disclose the following technical solutions.

According to a first aspect, an embodiment of this application discloses a model determining method, performed by a computer device. The method includes:
obtaining a sample information set, the sample information set including a plurality of pieces of sample voice information, each of the plurality of pieces of sample voice information having a plurality of pieces of corresponding sample voice sub-information, and each piece of sample voice sub-information being in one-to-one correspondence with a sample speaking object;
determining, for each of the plurality of pieces of sample voice information by using an initial quantity determining module in an initial voice separation model, information about a to-be-determined quantity of speaking objects corresponding to the sample voice information, and performing, by using an initial voice separation module in the initial voice separation model, voice separation on the sample voice information based on the information about the to-be-determined quantity of speaking objects, to obtain a plurality of pieces of first voice information;
determining, based on the plurality of pieces of sample voice sub-information that the sample voice information has, information about an actual quantity of speaking objects corresponding to the sample voice information; and
adjusting, based on a difference between the information about the to-be-determined quantity of speaking objects and the information about the actual quantity of speaking objects and based on a difference between the plurality of pieces of sample voice sub-information that the sample voice information has and the plurality of pieces of first voice information, a model parameter corresponding to the initial voice separation model, to obtain a voice separation model, the voice separation model being configured for performing voice separation on to-be-separated voice information to obtain a plurality of pieces of corresponding voice sub-information, and each piece of voice sub-information being in one-to-one correspondence with a to-be-recognized speaking object.

According to a second aspect, an embodiment of this application discloses a model application method, performed by a computer device. The method includes:
obtaining to-be-separated voice information, the to-be-separated voice information including voice sub-information corresponding to a plurality of to-be-recognized speaking objects; and
determining, based on the to-be-separated voice information by using a quantity determining module in a voice separation model, information about a quantity of speaking objects corresponding to the to-be-separated voice information, and performing, by using a voice separation module in the voice separation model, voice separation on the to-be-separated voice information based on the information about the quantity of speaking objects, to obtain voice sub-information in an amount equal to the quantity of speaking objects, the voice sub-information in the amount equal to the quantity of speaking objects being in one-to-one correspondence with the to-be-recognized speaking objects, the information about the quantity of speaking objects being configured for identifying the quantity of speaking objects corresponding to the to-be-separated voice information, and the voice separation model being determined by using the model determining method according to the foregoing aspect.

According to a third aspect, an embodiment of this application discloses a model determining apparatus, deployed on a computer device. The apparatus includes a first obtaining unit, a first determining unit, a second determining unit, and an adjustment unit.

The first obtaining unit is configured to obtain a sample information set, the sample information set including a plurality of pieces of sample voice information, each of the plurality of pieces of sample voice information having a plurality of pieces of corresponding sample voice sub-information, and each piece of sample voice sub-information being in one-to-one correspondence with a sample speaking object.

The first determining unit is configured to: determine, for each of the plurality of pieces of sample voice information by using an initial quantity determining module in an initial voice separation model, information about a to-be-determined quantity of speaking objects corresponding to the sample voice information, and perform, by using an initial voice separation module in the initial voice separation model, voice separation on the sample voice information based on the information about the to-be-determined quantity of speaking objects, to obtain a plurality of pieces of first voice information.

The second determining unit is configured to determine, based on the plurality of pieces of sample voice sub-information that the sample voice information has, information about an actual quantity of speaking objects corresponding to the sample voice information.

The adjustment unit is configured to adjust, based on a difference between the information about the to-be-determined quantity of speaking objects and the information about the actual quantity of speaking objects and based on a difference between the plurality of pieces of sample voice sub-information that the sample voice information has and the plurality of pieces of first voice information, a model parameter corresponding to the initial voice separation model, to obtain a voice separation model, the voice separation model being configured for performing voice separation on to-be-separated voice information to obtain a plurality of pieces of corresponding voice sub-information, and each piece of voice sub-information being in one-to-one correspondence with a to-be-recognized speaking object.

According to a fourth aspect, an embodiment of this application discloses a model application apparatus, deployed on a computer device. The apparatus includes a second obtaining unit and a third determining unit.

The second obtaining unit is configured to obtain to-be-separated voice information, the to-be-separated voice information including voice sub-information corresponding to a plurality of to-be-recognized speaking objects.

The third determining unit is configured to: perform, based on the to-be-separated voice information by using a quantity determining module in a voice separation model, information about a quantity of speaking objects corresponding to the to-be-separated voice information, and perform, by using a voice separation module in the voice separation model, voice separation on the to-be-separated voice information based on the information about the quantity of speaking objects, to obtain voice sub-information in an amount equal to the quantity of speaking objects, the voice sub-information in the amount equal to the quantity of speaking objects being in one-to-one correspondence with the to-be-recognized speaking objects, the information about the quantity of speaking objects being configured for identifying the quantity of speaking objects corresponding to the to-be-separated voice information, and the voice separation model being determined by using the model determining method according to the foregoing aspect.

According to a fifth aspect, an embodiment of this application discloses a computer device, including a processor and a memory.

The memory is configured to: store a computer program, and transmit the computer program to the processor.

The processor is configured to perform, according to instructions in the computer program, the model determining method according to the first aspect or the model application method according to the second aspect.

According to a sixth aspect, an embodiment of this application discloses a computer-readable storage medium, configured to store a computer program. The computer program is configured for performing the model determining method according to the first aspect or the model application method according to the second aspect.

According to a seventh aspect, an embodiment of this application discloses a computer program product including a computer program. When the computer program product is run on a computer device, the computer device is caused to perform the model determining method according to the first aspect or the model application method according to the second aspect.

It can be learned from the foregoing technical solutions that, to enable a model to have a capability of automatically analyzing a quantity of speaking objects in voice information, the initial voice separation model in this application may include the initial quantity determining module and the initial voice separation module. The initial quantity determining module can determine the information about the to-be-determined quantity of speaking objects corresponding to the sample voice information, the information about the to-be-determined quantity of speaking objects being configured for identifying the quantity of speaking objects that corresponds to the sample voice information and that is obtained by the initial quantity determining module through analysis. The initial voice separation module may separate the sample voice information based on the quantity of speaking objects identified by the information about the to-be-determined quantity of speaking objects, to obtain the plurality of pieces of first voice information. When voice separation is accurately performed on the sample voice information, the plurality of pieces of sample voice sub-information corresponding to the sample voice information can reflect a quantity of speaking objects corresponding to the sample voice information and the plurality of pieces of voice sub-information obtained through separation. Therefore, the information about the actual quantity of speaking objects corresponding to the sample voice information can be determined by using the plurality of pieces of sample voice sub-information. The difference between the information about the actual quantity of speaking objects and the information about the to-be-determined quantity of speaking objects can reflect accuracy of the initial quantity determining module in analyzing the quantity of speaking objects. The difference between the plurality of pieces of sample voice sub-information and the plurality of pieces of first voice information can reflect accuracy of the initial voice separation module in voice information separation. Therefore, performing parameter adjustment on the initial voice separation model with reference to the differences in the two dimensions can enable the initial quantity determining module to learn how to accurately analyze a quantity of speaking objects included in voice information on the one hand, and on the other hand, can enable the initial voice separation model to learn how to accurately perform voice separation on the voice information based on information about the quantity of speaking objects, to obtain voice information that can form accurate one-to-one correspondence with the speaking objects. Therefore, a voice separation model capable of independently analyzing a quantity of speaking objects and accurately performing voice separation based on the quantity of speaking objects obtained through analysis can be generated in a model determining manner of this application. During application, only to-be-separated voice information needs to be inputted, and then a voice separation result can be obtained without performing speaking object recognition on the voice information before the voice information is inputted. This improves convenience in voice separation and voice separation efficiency while ensuring voice separation accuracy.

### BRIEF DESCRIPTION OF THE DRAWINGS

To describe the technical solutions in the embodiments of this application or the related art more clearly, the following briefly describes the accompanying drawings required for describing the embodiments or the related art. Apparently, the accompanying drawings in the following descriptions show merely some embodiments of this application, and a person of ordinary skill in the art may still derive other accompanying drawings from these accompanying drawings without creative efforts.
FIG. 1 is a schematic diagram of a model determining method in an actual application scenario according to an embodiment of this application.
FIG. 2 is a flowchart of a model determining method according to an embodiment of this application.
FIG. 3 is a schematic diagram of an initial quantity determining module according to an embodiment of this application.
FIG. 4 is a schematic diagram of an initial voice separation module according to an embodiment of this application.
FIG. 5 is a schematic diagram of an initial feature extraction module according to an embodiment of this application.
FIG. 6 is a flowchart of a model application method according to an embodiment of this application.
FIG. 7 is a schematic diagram of a model application method according to an embodiment of this application.
FIG. 8 is a block diagram of a structure of a model determining apparatus according to an embodiment of this application.
FIG. 9 is a block diagram of a structure of a model application apparatus according to an embodiment of this application.
FIG. 10 is a diagram of a structure of a terminal according to an embodiment of this application.
FIG. 11 is a diagram of a structure of a server according to an embodiment of this application.

### DESCRIPTION OF EMBODIMENTS

The following describes the embodiments of this application with reference to the accompanying drawings.

In the related art, there are usually two types of voice separation models. The first type of voice separation model generates sample voice information for a particular speaking object during model training, so that the voice separation model can learn a voice feature of the speaking object based on the sample voice information during training, for example, a frequency feature and a timbre feature of a voice, to accurately recognize and separate voice information of the speaking object from to-be-separated voice information obtained by mixing voice information of a plurality of speaking objects. When the second type of voice separation model is applied, the model needs to be informed of a quantity of speaking objects whose voice information is included in to-be-separated voice information, and then the voice separation model can accurately perform voice separation.

For the first type of voice separation model, a large quantity of training samples need to be prepared for a same speaking object in an early model training process, and the training process is complex. In addition, a voice separation model obtained through training in this manner can only accurately perform feature separation on speaking objects corresponding to the training samples, which has a large limitation. In addition, different speaking objects may have a similarity in voice features. For example, frequency distributions of different speaking objects may overlap to some extent. An excessively loose frequency band set for a filter in the voice separation model causes aliasing between separated voice information of different speaking objects, making the separated voice information impure. An excessively tight frequency band of the filter can avoid aliasing between the voice information of different speaking objects to some extent, but causes a loss of the separated voice information. For the second type of voice separation model, the quantity of speaking objects corresponding to the to-be-separated voice information needs to be manually determined before the to-be-separated voice information is inputted to the model. Therefore, a pre-calculation and annotation process is needed, causing complexity and low efficiency of voice separation.

Based on this, to resolve the technical problem in the related art, this application provides a model determining method. An initial voice separation model includes an initial quantity determining module configured to analyze a quantity of speaking objects, and an initial voice separation module configured to perform voice separation based on information about a to-be-determined quantity of speaking objects determined by the initial voice separation model. Only sample voice information needs to be inputted, and then the initial voice separation model can obtain a voice separation result through separation. A difference between an accurate voice separation result corresponding to the sample voice information and the voice separation result outputted by the model can reflect accuracy of the initial voice separation model in analyzing the quantity of speaking objects on the one hand, and on the other hand, can reflect accuracy of voice information obtained by the initial voice separation model through separation. Therefore, performing parameter adjustment on the initial voice separation model based on the difference can enable the model to learn how to accurately analyze the quantity of speaking objects and accurately separate the voice information. Therefore, an obtained voice separation model can accurately implement voice separation without inputting information other than the to-be-separated voice information, reducing difficulty of voice separation and improving voice separation efficiency.

The method may be applied to a computer device. The computer device is a computer device capable of performing model training and model application, for example, may be a terminal device or a server. The method may be performed independently by the terminal device or the server. Alternatively, the method may be applied to a network scenario in which the terminal device communicates with the server, and is performed collaboratively by the terminal device and the server. The terminal device may be a mobile phone, a tablet computer, a laptop computer, a desktop computer, a smart television, an in-vehicle device, or another device. The server may be understood as an application server, or may be a web server. In actual deployment, the server may be an independent server, a cluster server, a cloud server, or the like.

For ease of understanding the technical solutions provided in this application, the following describes the model determining method provided in the embodiments of this application with reference to an actual application scenario.

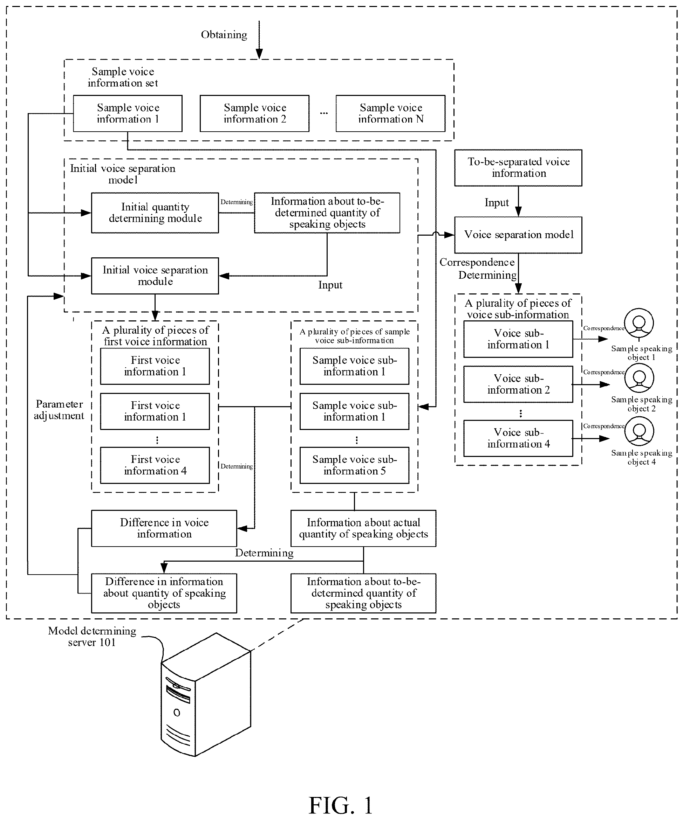

FIG. 1 is a schematic diagram of a model determining method in an actual application scenario according to an embodiment of this application. In the actual application scenario, a computer device may be a model determining server 101 with a model determining function.

First, the model determining server 101 may obtain a sample voice information set, including a plurality of pieces of sample voice information (for example, N pieces of sample voice information denoted as sample voice information 1, sample voice information 2, ..., and sample voice information N). Each piece of sample voice information has a plurality of pieces of corresponding sample voice sub-information. The plurality of pieces of sample voice sub-information corresponding to the sample voice information are an accurate voice separation result obtained when voice separation is accurately performed on the sample voice information. Each piece of sample voice sub-information corresponds to one sample speaking object.

The sample voice information 1 is used as an example. The model determining server 101 may input the sample voice information 1 to an initial voice separation model. An initial quantity determining module in the initial voice separation model may determine corresponding information about a to-be-determined quantity of speaking objects based on the sample voice information 1. The information about the to-be-determined quantity of speaking objects is configured for identifying the quantity of speaking objects obtained by the module through analysis. An initial voice separation module in the initial voice separation model may perform voice separation on the sample voice information 1 based on the sample voice information 1 and the information about the to-be-determined quantity of speaking objects, to obtain a plurality of pieces of first voice information. The plurality of pieces of first voice information are a plurality of pieces of voice information obtained by the model through separation.

Information about an actual quantity of speaking objects corresponding to the sample voice information 1 may be determined based on the plurality of pieces of sample voice sub-information corresponding to the sample voice information 1. The information about the actual quantity of speaking objects is configured for identifying the actual quantity of speaking objects corresponding to the sample voice information 1. For example, it can be learned from FIG. 1 that the sample voice information 1 actually corresponds to five speaking objects. Therefore, a difference between the information about the actual quantity of speaking objects and the information about the to-be-determined quantity of speaking objects can reflect accuracy of the initial voice separation model in analyzing a quantity of speaking objects, and a difference between the plurality of pieces of first voice information and the plurality of pieces of sample voice sub-information can reflect overall voice separation accuracy of the initial voice separation model in performing voice separation on the sample voice information 1. Based on this, the model determining server 101 may perform parameter adjustment on the initial voice separation model with reference to the difference in the quantity of speaking objects and the difference in the voice information, so that the initial voice separation model learns how to accurately analyze a quantity of speaking objects and separate voice information, to obtain an adjusted voice separation model. During model application, only to-be-separated voice information but no other information needs to be inputted to the voice separation model, and then the voice separation model can automatically accurately separate the to-be-separated voice information, to determine a plurality of pieces of voice sub-information that correspond to the to-be-separated voice information and that are in one-to-one correspondence with to-be-recognized speaking objects. Therefore, preliminary preparations required for voice separation can be reduced, difficulty of voice separation can be reduced, and voice separation efficiency is improved. For example, during actual application, the to-be-separated voice information may be audio information corresponding to video information including a plurality of speaking objects, and the voice separation model can obtain, through separation, voice information respectively corresponding to the plurality of speaking objects, so that a receiver of the video information can selectively receive voice information of a speaking object in which the receiver is interested.

The following describes a model determining method and a model application method provided in the embodiments of this application with reference to the accompanying drawings.

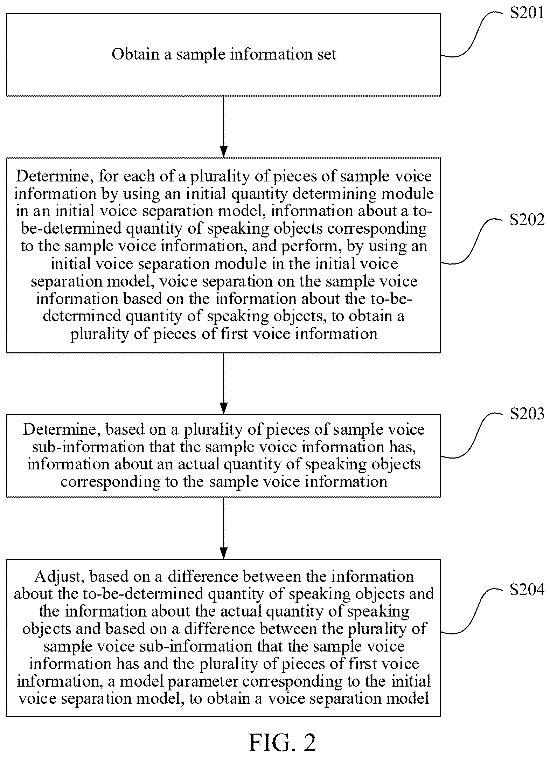

FIG. 2 is a flowchart of a model determining method according to an embodiment of this application. In this embodiment, the method may be performed by a computer device. The method includes the following operations.

S201: Obtain a sample information set.

The sample information set is configured for performing model training on an initial voice separation model. The sample information set may include a plurality of pieces of sample voice information. The sample voice information may be any voice information formed by mixing voice information of a plurality of speaking objects. Each of the plurality of pieces of sample voice information has a plurality of corresponding sample voice sub-information. The sample voice sub-information is in one-to-one correspondence with sample speaking objects. For example, any one of the plurality of pieces of sample voice information is formed by combining a plurality of pieces of corresponding sample voice sub-information. In other words, when voice separation is accurately performed on the sample voice information, the plurality of pieces of sample voice sub-information are a voice separation result corresponding to the sample voice information.

For example, the sample voice information may be audio information corresponding to video information including a plurality of speaking objects (for example, a movie or a television drama including a plurality of characters), and the plurality of pieces of sample voice sub-information may be voice information respectively corresponding to the speaking objects (for example, voice information of the characters) in the video information. The speaking object is an object capable of generating voice information, and may be, for example, various objects like a human object and an animal object. The sample speaking object may be a speaking object generating sample voice information.

S202: Determine, for each of the plurality of pieces of sample voice information by using an initial quantity determining module in the initial voice separation model, information about a to-be-determined quantity of speaking objects corresponding to the sample voice information, and perform, by using an initial voice separation module in the initial voice separation model, voice separation on the sample voice information based on the information about the to-be-determined quantity of speaking objects, to obtain a plurality of pieces of first voice information.

To enable a voice separation model to perform voice separation based only on inputted voice information without a limitation on voice separation in a speaking object dimension, the computer device needs to enable the voice separation model to have a capability of analyzing a quantity of speaking objects in a model training process. Based on this, in this embodiment of this application, the initial voice separation model may include the initial quantity determining module and the initial voice separation module. The initial quantity determining module is configured to analyze a quantity of speaking objects included in voice information. The initial voice separation module is configured to separate the voice information based on the quantity of speaking objects obtained through analysis, to obtain a separation result. Therefore, with addition of the initial quantity determining module, the model can have an independent quantity analysis capability, and the quantity of speaking objects does not need to be inputted to the model during voice separation.

In the model training process, any piece of sample voice information is used as an example. The computer device may input the sample voice information to the initial voice separation model, may determine, by using the initial quantity determining module in the initial voice separation model, information about a to-be-determined quantity of speaking objects corresponding to the sample voice information, and may perform, by using the initial voice separation module in the initial voice separation model, voice separation on the sample voice information based on the information about the to-be-determined quantity of speaking objects, to obtain a plurality of pieces of first voice information. The information about the to-be-determined quantity of speaking objects is configured for identifying the quantity of speaking objects included in the sample voice information obtained by the initial quantity determining module through analysis. The plurality of pieces of first voice information are a voice separation result outputted by the initial voice separation model. A quantity of pieces of first voice information is the quantity of speaking objects identified by the information about the to-be-determined quantity of speaking objects.

S203: Determine, based on the plurality of pieces of sample voice sub-information that the sample voice information has, information about an actual quantity of speaking objects corresponding to the sample voice information.

A plurality of pieces of sample voice sub-information are an accurate voice separation result corresponding to one piece of sample voice information, and the sample voice sub-information is in one-to-one correspondence with the sample speaking objects. Therefore, an actual quantity of speaking objects corresponding to the sample voice information may be determined by using the plurality of pieces of sample voice sub-information, to further determine information about the actual quantity of speaking objects. The information about the actual quantity of speaking objects is configured for identifying the actual quantity of speaking objects included in the sample voice information. For example, the computer device may directly determine a quantity of pieces of sample voice sub-information as the information about the actual quantity of speaking objects.

S204: Adjust, based on a difference between the information about the to-be-determined quantity of speaking objects and the information about the actual quantity of speaking objects and based on a difference between the plurality of sample voice sub-information that the sample voice information has and the plurality of pieces of first voice information, a model parameter corresponding to the initial voice separation model, to obtain the voice separation model.

The information about the to-be-determined quantity of speaking objects can identify the quantity of speaking objects included in the sample voice information obtained by the initial quantity determining module through analysis, and the information about the actual quantity of speaking objects is configured for identifying the actual quantity of speaking objects included in the sample voice information. Therefore, the difference between the information about the to-be-determined quantity of speaking objects and the information about the actual quantity of speaking objects can reflect accuracy of the initial quantity determining module in analyzing the quantity of speaking objects.

In addition, the plurality of pieces of first voice information are the voice separation result that corresponds to the sample voice information and that is outputted by the initial voice separation model, and the plurality of pieces of sample voice sub-information are the accurate voice separation result corresponding to the sample voice information. Therefore, the difference between the plurality of pieces of first voice information and the plurality of pieces of sample voice sub-information can reflect overall voice separation accuracy of the initial voice separation model. Therefore, while gradually reducing the differences in the two dimensions, performing parameter adjustment on the initial voice separation model with reference to the differences in the two dimensions can enable the initial quantity determining module to learn how to accurately analyze a quantity of speaking objects in voice information on the one hand, and on the other hand, can enable the entire model to obtain a more accurate voice separation result through separation, to obtain the voice separation model capable of accurately analyzing the speaking objects included in the voice information and accurately performing voice separation based on the quantity of speaking objects accurately obtained through analysis. Parameter adjustment may be performed on the initial quantity determining module to obtain a quantity determining module in the voice separation model. Parameter adjustment may be performed on the initial voice separation module to obtain a voice separation module in the voice separation model.

The voice separation model may be configured to perform voice separation on to-be-separated voice information to obtain a plurality of pieces of corresponding voice sub-information. The to-be-separated voice information may be any piece of voice information on which voice separation needs to be performed. The voice sub-information obtained by using the voice separation model is in one-to-one correspondence with to-be-recognized speaking objects.

It can be learned from the foregoing technical solutions that, to enable a model to have a capability of automatically analyzing a quantity of speaking objects in voice information, the initial voice separation model in this application may include the initial quantity determining module and the initial voice separation module. The initial quantity determining module can determine the information about the to-be-determined quantity of speaking objects corresponding to the sample voice information, the information about the to-be-determined quantity of speaking objects being configured for identifying the quantity of speaking objects that corresponds to the sample voice information and that is obtained by the initial quantity determining module through analysis. The initial voice separation module may separate the sample voice information based on the quantity of speaking objects identified by the information about the to-be-determined quantity of speaking objects, to obtain the plurality of pieces of first voice information. When voice separation is accurately performed on the sample voice information, the plurality of pieces of sample voice sub-information corresponding to the sample voice information can reflect a quantity of speaking objects corresponding to the sample voice information and the plurality of pieces of voice sub-information obtained through separation. Therefore, the information about the actual quantity of speaking objects corresponding to the sample voice information can be determined by using the plurality of pieces of sample voice sub-information. The difference between the information about the actual quantity of speaking objects and the information about the to-be-determined quantity of speaking objects can reflect accuracy of the initial quantity determining module in analyzing the quantity of speaking objects. The difference between the plurality of pieces of sample voice sub-information and the plurality of pieces of first voice information can reflect accuracy of the initial voice separation module in voice information separation. Therefore, performing parameter adjustment on the initial voice separation model with reference to the differences in the two dimensions can enable the initial quantity determining module to learn how to accurately analyze a quantity of speaking objects included in voice information on the one hand, and on the other hand, can enable the initial voice separation model to learn how to accurately perform voice separation on the voice information based on information about the quantity of speaking objects, to obtain voice information that can form accurate one-to-one correspondence with the speaking objects. Therefore, a voice separation model capable of independently analyzing a quantity of speaking objects and accurately performing voice separation based on the quantity of speaking objects obtained through analysis can be generated in a model determining manner of this application. During application, only to-be-separated voice information needs to be inputted, and then a voice separation result can be obtained without performing speaking object recognition on the voice information before the voice information is inputted. This improves convenience in voice separation and voice separation efficiency while ensuring voice separation accuracy.

There may be a plurality of forms of information about a quantity of speaking objects. In a possible implementation, the information about the quantity of speaking objects may be information including a count identifier. When the initial quantity determining module determines the information about the to-be-determined quantity of speaking objects corresponding to the sample voice information, the sample voice information may be first separated in a voice feature dimension, to determine a plurality of second voice sub-features corresponding to the sample voice information. The plurality of second voice sub-features are a separation result of separating the sample voice information in the voice feature dimension by the initial quantity determining module. A voice feature is a feature of voice information, and can identify an information feature of the voice information.

Voice information of different speaking objects usually has different features, for example, voice information of different speaking objects usually has different time domain features and frequency domain features, so that a voice feature can represent a speaking object to some extent. Therefore, in this application, the initial quantity determining module may separately analyze the plurality of second voice sub-features to determine whether each second voice sub-feature can represent a speaking object. The computer device may determine, based on the plurality of second voice sub-features by using the initial quantity determining module, to-be-determined count information corresponding to each of the plurality of second voice sub-features. The to-be-determined count information is one type of count identifier. The to-be-determined count information is configured for identifying a probability that the corresponding second voice sub-feature corresponds to a single sample speaking object. In other words, by analyzing each second voice sub-feature, the initial quantity determining module may determine whether each second voice sub-feature can represent a single sample speaking object, to determine the to-be-determined count information.

The computer device may determine the to-be-determined count information corresponding to each of the plurality of second voice sub-features as the information about the to-be-determined quantity of speaking objects. The information about the to-be-determined quantity of speaking objects is configured for identifying a quantity of second voice sub-features corresponding to a single sample speaking object. Because the to-be-determined count information can identify the probability that the second voice sub-feature corresponds to a single sample speaking object, the quantity of second voice sub-features corresponding to a single sample speaking object can be determined among the plurality of second voice sub-features with reference to the to-be-determined count information corresponding to each of the plurality of second voice sub-features, to identify a quantity of sample speaking objects.

Similarly, when determining, based on the plurality of sample voice sub-information that the sample voice information has, the information about the actual quantity of speaking objects corresponding to the sample voice information, the computer device may perform S2031 to S2033 (not shown in the figure). S2031 to S2033 are a possible implementation of S203.

S2031: Determine second voice sub-information corresponding to each of the plurality of second voice sub-features.

A voice feature is extracted from voice information, so that the voice information may be reversely restored based on the voice feature. To be specific, a voice feature corresponding to the second voice sub-information is the second voice sub-feature, so that the second voice sub-information may be restored based on the second voice sub-feature.

S2032: Determine, for each of the plurality of pieces of second voice sub-information, a maximum value among respectively corresponding similarities between the second voice sub-information and the plurality of pieces of sample voice sub-information as actual count information corresponding to the second voice sub-information.

As described above, the to-be-determined count information is configured for identifying the probability that the corresponding second voice sub-feature corresponds to a single sample speaking object, and the sample voice sub-information is voice information corresponding to a single sample speaking object. Therefore, the similarity between the second voice sub-information and the sample voice sub-information can reflect the probability that the second voice sub-information is voice information corresponding to a single sample speaking object, to reflect the probability that the second voice sub-feature corresponding to the second voice sub-information corresponds to a single sample speaking object.

Based on this, the computer device may separately calculate, for each of the plurality of pieces of second voice sub-information, the similarities between the plurality of pieces of sample voice sub-information and the second voice sub-information. The maximum value among the similarities may indicate that the similarity between the second voice sub-information and the sample voice sub-information is the highest, that is, the second voice sub-information most likely corresponds to a sample speaking object corresponding to the sample voice sub-information. Therefore, the computer device may determine the maximum value among the respectively corresponding similarities between the second voice sub-information and the plurality of pieces of sample voice sub-information as the actual count information corresponding to the second voice sub-information, to measure whether the second voice sub-information corresponds to a single sample speaking object.

S2033: Determine the actual count information corresponding to each of the plurality of second voice sub-features as the information about the actual quantity of speaking objects.

Because the actual count information corresponding to the second voice sub-feature can reflect a probability that the second voice sub-feature actually corresponds to a single sample speaking object, the computer device may determine the actual count information corresponding to each of the plurality of second voice sub-features as the information about the actual quantity of speaking objects.

When performing S204, the computer device may perform S2041 and S2042 (not shown in the figure). S2041 and S2042 are a possible implementation of S204.

S2041: Adjust, for each of the plurality of second voice sub-features based on a difference between the to-be-determined count information and the actual count information corresponding to the second voice sub-feature, a model parameter corresponding to the initial quantity determining module.

The to-be-determined count information corresponding to the second voice sub-feature can reflect the probability of corresponding to a single sample speaking object obtained by the initial voice separation model through analysis. The information about the actual quantity of speaking objects is the probability that the second voice sub-feature actually corresponds to a single sample speaking object. Therefore, the difference can reflect accuracy of the initial quantity determining module in analyzing whether the second voice sub-feature corresponds to a single sample speaking object, and adjusting the initial quantity determining module based on the difference enables the module to learn how to accurately analyze whether a voice sub-feature corresponds to a single speaking object, to further learn how to determine accurate information about a quantity of speaking objects.

S2042: Adjust, based on the difference between the plurality of pieces of sample voice sub-information that the sample voice information has and the plurality of pieces of first voice information, the model parameter corresponding to the initial voice separation model.

Because the voice separation result is obtained collaboratively by a plurality of modules in the initial voice separation model, the computer device may perform overall adjustment on the initial voice separation model based on a difference in the voice separation result, to obtain an accurate and effective voice separation model.

As described above, the quantity of speaking objects is key information in a voice separation process. The initial quantity determining module can separate a voice feature of the sample voice information to obtain the plurality of second voice sub-features, and the to-be-determined count information corresponding to each of the plurality of second voice sub-features can identify the probability that the second voice sub-feature corresponds to a single sample speaking object. Therefore, the quantity of second voice sub-features corresponding to a single sample speaking object can be determined among the plurality of second voice sub-features based on the to-be-determined count information corresponding to each of the plurality of second voice sub-features. The quantity is the information about the to-be-determined quantity of speaking objects obtained by the initial quantity determining module through analysis.

Based on this, when performing, by using the initial voice separation module in the initial voice separation model, voice separation on the sample voice information based on the information about the to-be-determined quantity of speaking objects, to obtain the plurality of pieces of first voice information, the computer device may determine, among the plurality of second voice sub-features, a quantity of second voice sub-features whose probabilities identified by corresponding to-be-determined count information are greater than a first threshold as the to-be-determined quantity of speaking objects. After the to-be-determined quantity of speaking objects is obtained, the initial voice separation module may use the to-be-determined quantity of speaking objects as a voice separation basis, and perform voice separation on the sample voice information based on the to-be-determined quantity of speaking objects, to obtain first voice information in an amount equal to the to-be-determined quantity of speaking objects.

It can be learned from the foregoing content that the to-be-determined count information corresponding to the second voice sub-feature is one of key information in the voice separation process, and the to-be-determined count information is determined based on the second voice sub-feature. Therefore, analysis accuracy of the initial quantity determining module for the second voice sub-feature is also one of important factors affecting voice separation accuracy.

Based on this, in a possible implementation, to further improve the voice separation accuracy, the computer device may improve the analysis accuracy of the initial quantity determining module for the second voice sub-feature.

When performing S2041, the computer device may perform S20411 (not shown in the figure). S20411 is a possible implementation of S2041.

S20411: Adjust, based on a difference between the second voice sub-information corresponding to the second voice sub-feature and target voice sub-information and the difference between the to-be-determined count information and the actual count information corresponding to the second voice sub-feature, the model parameter corresponding to the initial quantity determining module.

The target voice sub-information is sample voice sub-information whose similarity with the second voice sub-information corresponding to the second voice sub-feature is maximum among the plurality of pieces of sample voice sub-information. In other words, a sample speaking object represented by the second voice sub-feature is highly probably a sample speaking object corresponding to the target voice sub-information. If the initial quantity determining module extracts the second voice sub-feature more accurately, the second voice sub-feature is closer to a voice feature of the sample speaking object, and the second voice sub-information corresponding to the second voice sub-feature is closer to the target voice sub-information.

Based on this, on the one hand, the computer device can enable, in the model training process based on the difference between the second voice sub-information corresponding to the second voice sub-feature and the target voice sub-information, the initial quantity determining module to learn how to analyze and extract voice features of voice information, so that the extracted voice features can effectively represent each speaking object. On the other hand, the computer device can enable, based on the difference between the to-be-determined count information and the actual count information corresponding to the second voice sub-feature, the initial quantity determining module to learn how to perform accurate count information analysis based on the extracted voice feature, to improve accuracy of determined information about a quantity of speaking objects in the two dimensions, thereby improving the voice separation accuracy.

As described above, different speaking objects have different voice features, and the voice features can represent the speaking objects to some extent. Therefore, in a possible implementation, the computer device may guide a voice information separation process of the initial voice separation module based on representation effects of the second voice sub-features obtained by the initial voice separation module through analysis on speaking objects.

When determining the information about the to-be-determined quantity of speaking objects corresponding to the sample voice information, the computer device may further determine a plurality of second voice sub-features corresponding to the sample voice information. The second voice sub-features are consistent with the second voice sub-features described above. The computer device may determine, based on the plurality of second voice sub-features, the information about the to-be-determined quantity of speaking objects corresponding to the sample voice information. The information about the to-be-determined quantity of speaking objects is configured for identifying a plurality of standard features corresponding to a single sample speaking object among the plurality of second voice sub-features. In other words, the standard feature is a second voice sub-feature that is determined by the initial quantity determining module to correspond to a single sample speaking object. For example, the computer device may perform analysis by using the foregoing to-be-determined count information, and determine a second voice sub-feature with a high probability identified by the to-be-determined count information as a standard feature. A current standard feature may be configured for identifying a speaking feature of a speaking object corresponding to the current standard feature. The speaking feature is a feature of the speaking object in producing voice information. The current standard feature is a voice feature corresponding to the speaking object. The current standard feature may be any standard feature.

When performing, by using the initial voice separation module in the initial voice separation model, voice separation on the sample voice information based on the information about the to-be-determined quantity of speaking objects, to obtain the plurality of pieces of first voice information, the computer device may use each of the plurality of standard features as a current standard feature. The computer device may determine, based on the current standard feature and the sample voice information, first voice information corresponding to the current standard feature. To be specific, the computer device may perform information separation on the sample voice information based on the current standard features, to separate voice information corresponding to a voice feature conforming to the current standard feature as the first voice information corresponding to the current standard feature. Because the current standard feature can identify a speaking feature of a corresponding speaking object, the first voice information corresponding to the current standard feature may be determined as voice information corresponding to the speaking object corresponding to the current standard feature.

Therefore, when voice separation is performed, on the one hand, under a restriction of the quantity of speaking objects, the voice information obtained through separation can conform to the quantity of speaking objects included in the to-be-separated voice information. On the other hand, under a guidance of a standard feature, voice information accurately corresponding to the to-be-recognized speaking object in the to-be-separated voice information can be obtained through voice separation, improving the overall voice separation accuracy.

When determining, based on the current standard feature and the sample voice information, the first voice information corresponding to the current standard feature, in a possible implementation, the computer device may determine, based on a similarity between voice features, the first voice information corresponding to the current standard feature.

First, the computer device may determine a sample voice feature corresponding to the sample voice information. The sample voice feature is a voice feature corresponding to the entire sample voice information. Therefore, the sample voice feature includes voice features respectively corresponding to voice information of a plurality of sample speaking objects. The computer device may extract a first voice sub-feature corresponding to the current standard feature from the sample voice feature based on a similarity between the current standard feature and each voice feature part in the sample voice feature. A similarity between the first voice sub-feature and the current standard feature is greater than a second threshold. The second threshold is configured for determining whether there is a high similarity between voice features, that is, whether there is a high similarity between the first voice sub-feature and the current standard feature. Therefore, the first voice sub-feature corresponds to a same sample speaking object as the current standard feature at a high probability. Therefore, the computer device may determine, based on the first voice sub-feature corresponding to the current standard feature, the first voice information corresponding to the current standard feature, and the first voice information may be determined as the voice information corresponding to the speaking object represented by the current standard feature.

The standard features are in one-to-one correspondence with the sample speaking objects, and different standard features usually correspond to different sample speaking objects. Therefore, in a possible implementation, to further improve the voice separation accuracy, the computer device not only may extract a similar voice feature based on the current standard feature, but also may exclude, based on another standard feature, a part that is in the extracted voice feature and that has a probability of corresponding to another sample speaking object.

In the foregoing manner, the computer device may extract the first voice sub-feature corresponding to each of the plurality of standard features. Each first voice sub-feature can reflect, to some extent, voice information that is in the sample voice information and that corresponds to a speaking object represented by the corresponding standard feature. Therefore, when determining, based on the first voice sub-feature corresponding to the current standard feature, the first voice information corresponding to the current standard feature, the computer device may first use first voice sub-features respectively corresponding to remaining standard features among the plurality of standard features as a plurality of comparison voice sub-features. If there is a similar feature part between the first voice sub-feature corresponding to the current standard feature and the comparison voice sub-feature, there is a high probability that the feature part corresponds to another speaking object, and there is a high probability that voice information corresponding to the another speaking object is determined when voice information is determined based on the first voice sub-feature.

Based on this, the computer device may extract, based on the plurality of comparison voice sub-features, a first voice feature corresponding to the current standard feature from the first voice sub-feature corresponding to the current standard feature. The first voice feature is a first voice sub-feature whose similarities with the plurality of comparison voice sub-features are all less than a third threshold. The remaining standard features are standard features among the plurality of standard features other than the current standard feature. The third threshold is configured for determining whether there is a low similarity between voice features. To be specific, the computer device may exclude, based on the third threshold, a voice feature part that is in the first voice sub-feature corresponding to the current standard feature and that has a high similarity with the comparison voice sub-feature, to exclude a voice feature part with a high probability of corresponding to another sample speaking object, so that the first voice feature is more closely associated with the sample speaking object represented by the current standard feature.

Further, the computer device may determine, based on the first voice feature corresponding to the current standard feature, the first voice information corresponding to the current standard feature, so that a correspondence between the first voice information and the speaking object represented by the current standard feature is more accurate, interference of voice information of another speaking object to the first voice information is reduced, and a more accurate voice separation result is obtained.

Specifically, in a possible implementation, to further improve the voice separation accuracy, after extracting the first voice sub-feature corresponding to the current standard feature in the foregoing manner, the computer device may further extract, based on the current standard feature by using the initial voice separation module, a second voice feature corresponding to the current standard feature from the first voice sub-feature corresponding to the current standard feature. Similar to the manner of extracting the first voice sub-feature, the computer device may perform extraction based on a similarity between each feature part in the first voice sub-feature and the current standard feature, to obtain a second voice feature closer to the current standard feature. The second voice feature is a first voice sub-feature whose similarity with the current standard feature is greater than a fourth threshold. The fourth threshold is greater than the second threshold. In other words, this process is further purification of the first voice sub-feature based on the current standard feature.

When determining, based on the first voice feature corresponding to the current standard feature, the first voice information corresponding to the current standard feature, the computer device may combine feature extraction based on the current standard feature with feature extraction based on another standard feature, and fuse the first voice feature corresponding to the current standard feature with the second voice feature corresponding to the current standard feature, to generate a voice feature corresponding to the current standard feature. Therefore, on the one hand, the voice feature highly conforms to the speaking feature of the speaking object identified by the current standard feature; and on the other hand, a probability that the voice feature includes a voice feature of a speaking object identified by the another standard feature is low. Therefore, the computer device may determine, based on the voice feature corresponding to the current standard feature, the first voice information corresponding to the current standard feature. This further improves an association between the first voice information and the speaking object represented by the current standard feature, thereby improving the voice separation accuracy.

It can be learned from the foregoing content that in the voice separation process, an overall voice feature corresponding to the sample voice information is also one of key information for voice separation. Therefore, the computer device not only may optimize the two parts of analysis of the quantity of speaking objects and voice separation, but also may perform more accurate processing for extracting the voice feature of the sample voice information, to obtain a more accurate voice feature that can reflect the voice information feature of the sample voice information.

In a possible implementation, the initial voice separation model may further include an initial feature extraction module. The initial feature extraction module is configured to extract the sample voice feature corresponding to the sample voice information. The sample voice feature is configured for representing an information feature corresponding to the sample voice information, for example, a feature in time domain or frequency domain. Therefore, in this embodiment of this application, the sample voice feature corresponding to the sample voice information may be further extracted by using the initial feature extraction module.

Based on this, when performing S202, the computer device may perform S2021 (not shown in the figure). S2021 is a possible implementation of S202.

S2021: Determine, based on the sample voice feature by using the initial quantity determining module in the initial voice separation model, the information about the to-be-determined quantity of speaking objects corresponding to the sample voice information, and perform, by using the initial voice separation module in the initial voice separation model, voice separation on the sample voice information based on the information about the to-be-determined quantity of speaking objects and the sample voice feature, to obtain the plurality of pieces of first voice information.

The initial quantity determining module may analyze the sample voice feature to extract the plurality of second voice sub-features, to analyze a quantity of features corresponding to a single sample speaking object, to determine the information about the to-be-determined quantity of speaking objects. The initial voice separation module may extract the plurality of first voice sub-features from the sample voice feature based on the information about the to-be-determined quantity of speaking objects, to determine the plurality of pieces of first voice information.

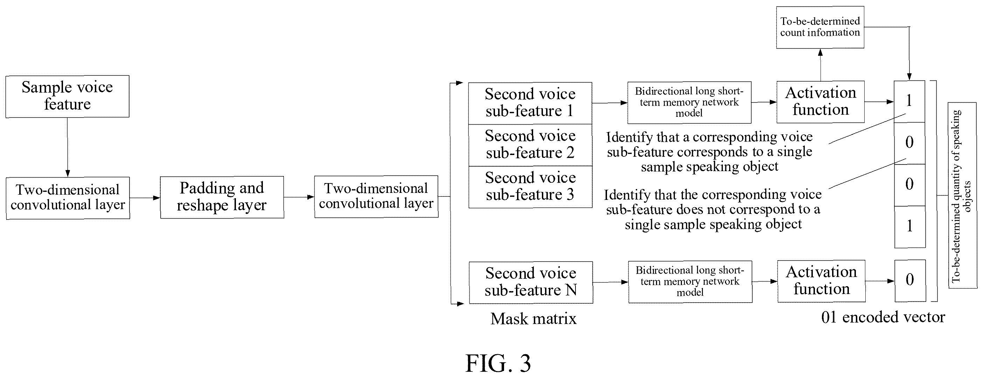

FIG. 3 is a schematic diagram of the initial quantity determining module according to an embodiment of this application. The initial quantity determining module may include two two-dimensional convolutional networks (2D CNNs), a padding and reshape layer, a bidirectional long short-term memory (BLSTM for short) network model, and an activation function (Relu). The computer device may input the sample voice feature to the first two-dimensional convolutional neural network in the initial quantity determining module, to obtain a plurality of features. After the features are padded and reshaped based on a preset mask matrix size, a mask matrix may be obtained by using the second two-dimensional convolutional neural network. The mask matrix is a feature matrix including the plurality of second voice sub-features. As shown in FIG. 3, a length of the mask matrix may be a preset length, for example, is set to N. In this case, a maximum quantity of speaking objects determined by the initial quantity determining module is N. N may be, for example, 128. A size of the mask matrix is expandable. The size (that is, a dimension) of the mask matrix can be controlled by making a change at a padding and reshaping phase.

The to-be-determined count information corresponding to each second voice sub-feature may be obtained through analysis by using the bidirectional long short-term memory network model and the activation function, and is configured for identifying the probability that the second voice sub-feature corresponds to a single speaking object. A 01 encoded vector corresponding to the second voice sub-feature can be determined based on the to-be-determined count information, where 1 is configured for identifying that the corresponding second voice sub-feature corresponds to a single sample speaking object, and 0 is configured for identifying that the corresponding second voice sub-feature does not correspond to a single sample speaking object. Therefore, the to-be-determined quantity of speaking objects may be reflected by a quantity of 1 in the 01 encoded vector. For example, the computer device may determine that a 01 encoded vector of a second voice sub-feature whose probability identified by the to-be-determined count information is greater than a threshold is 1, and determine that a 01 encoded vector of a second voice sub-feature whose probability identified by the to-be-determined count information is not greater than the threshold is 0. The module may directly input, to the initial voice separation module for voice separation, the to-be-determined quantity of speaking objects and the second voice sub-feature whose corresponding 01 encoded vector is 1.

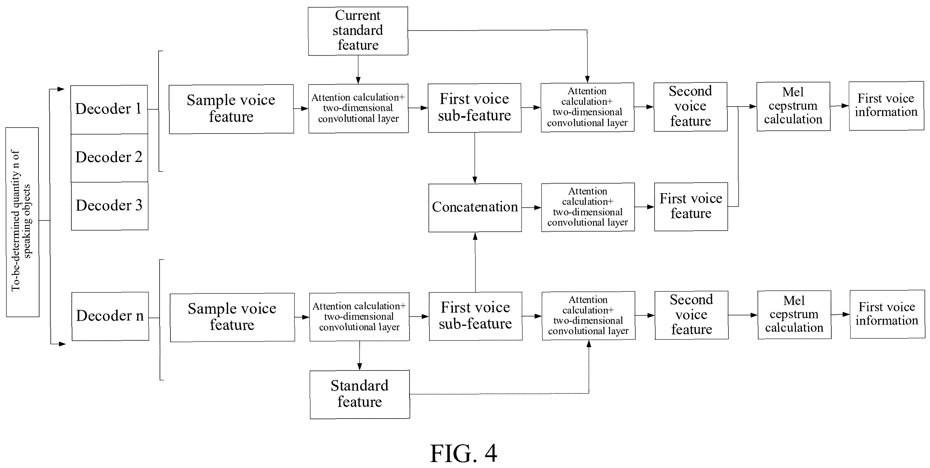

FIG. 4 is a schematic diagram of the initial voice separation module according to an embodiment of this application. The initial voice separation module includes a plurality of decoders connected in parallel. A quantity of the decoders is the to-be-determined quantity of speaking objects obtained by the initial quantity determining module through analysis. To be specific, the decoders are in one-to-one correspondence with the speaking objects, and one decoder is configured to separate voice information corresponding to one speaking object. An input of each decoder is a sample voice feature corresponding to sample voice information and a standard feature (also referred to as a mask vector) corresponding to a single speaking object in the mask matrix.

It can be learned from FIG. 4 that each decoder includes attention calculation mechanisms, two-dimensional convolutional neural networks, and Mel cepstrum calculation. The current standard feature is used as an example. The current standard feature and the sample voice feature are first inputted to the attention calculation mechanism. The similarity between the current standard feature and each voice feature in the sample voice feature is calculated based on the current standard feature, and a two-dimensional feature (that is, a first voice sub-feature) is outputted by using the two-dimensional convolutional neural network. Application of the two-dimensional convolutional neural network is mainly for feature expansion. This is because a large quantity of small convolution kernels may be used for calculation when the sample voice feature is extracted, and a size of the voice feature may be reduced step by step in calculation. Therefore, to balance the feature size, two two-dimensional convolutional neural networks are added to the decoder, to expand the feature size. This can ensure that a time length of finally outputted voice information is the same as a time length of original voice information.

It can be learned from FIG. 4 that in addition to a decoding link of the decoder, there is also attention mechanism calculation between different decoders. After the first voice sub-features are determined, first voice sub-features calculated by n decoders are concatenated to each other, to form a multilayer feature. Then, attention mechanism calculation is performed. A calculation procedure is: calculating similarities between the first voice sub-feature outputted by a decoder corresponding to the current standard feature and first voice sub-features outputted by the other n-1 decoders, and excluding a part whose similarities with the first voice sub-features outputted by the other n-1 decoders are excessively high, to obtain the first voice feature; then, fusing the first voice feature with the second voice feature extracted from the first voice sub-feature in the decoder corresponding to the current standard feature by using the second attention calculation mechanism and the second two-dimensional convolutional neural network, to obtain the voice feature corresponding to the current standard feature; and performing Mel cepstrum calculation to obtain the first voice information. In this way, the decoder corresponding to the current standard feature can perceive voice information of a speaking object decoded by another decoder, and a weight of an information dimension that the another decoder pays attention to can be reduced in the decoder corresponding to the current standard feature. Therefore, information exchange between a plurality of decoders is implemented, and purity of final voice separation is improved.

Voice information usually includes information of two dimensions, that is, time domain information and frequency domain information. The time domain information, for example, may reflect features such as a speaking tempo of the speaking object. The frequency domain information, for example, may reflect features such as a speaking tone of the speaking object. Based on this, in a possible implementation, to highlight features of target sample voice information in two dimensions of time domain and frequency domain, the computer device may separately perform voice feature extraction based on a time domain feature and a frequency domain feature of the target sample voice information.

Specifically, when extracting the sample voice feature corresponding to the sample voice information, the computer device may extract, based on time domain information corresponding to the sample voice information, a first feature corresponding to the sample voice information, and extract, based on frequency domain information corresponding to the sample voice information, a second feature corresponding to the sample voice information. Therefore, the first feature can reflect a time domain feature of the sample voice information, and the second feature can reflect a frequency domain feature of the sample voice information. The computer device may determine the sample voice feature based on the first feature and the second feature. Therefore, the sample voice feature can well represent both the time domain feature and the frequency domain feature of the sample voice information, facilitating more accurate analysis and processing on the sample voice feature.

Because voice information includes frequency domain information and time domain information, performing feature extraction based on only information of a single dimension may cause a large loss of an extracted voice feature. For example, performing feature extraction based on only the time domain information may cause a large loss of the frequency domain information in an extraction process. Consequently, the feature may have a poor overall representation effect on the sample voice information. Therefore, in a possible implementation, regardless of whether to extract the first feature or the second feature, the computer device may perform extraction by combining information of two dimensions.

In addition, feature extraction is a process of extracting some representative information from information. When a same amount of information needs to be extracted, a larger quantity of instances of feature extraction in the feature extraction process indicates more detailed feature extraction of the voice information to some extent, and indicates that more details of the voice information can be noticed. For example, when the voice feature is extracted through convolution, in the related art, the voice feature may be obtained based on one instance of feature extraction by using a large convolution kernel. However, in this application, a large convolution kernel may be split into a plurality of small convolution kernels, and one small convolution kernel corresponds to one instance of feature extraction, so that the voice feature corresponding to the voice information may be extracted through a plurality of instances of feature extraction. On the one hand, a deeper convolutional network layer is expanded. On the other hand, use of the small convolution kernel in feature extraction enables detection of more information details, because smaller scales exhibit higher sensitivity to subtle variations in information details during calculation of the entire convolution kernel.

Therefore, in this application, the computer device may extract, by combining information of a plurality of dimensions, the sample voice feature corresponding to the sample voice information through a plurality of instances of feature extraction. For example, when extracting, based on the time domain information corresponding to the sample voice information, the first feature corresponding to the sample voice information, the computer device may determine, through N instances of feature extraction, the first feature corresponding to the sample voice information, N being a positive integer greater than 1. Output information of an i^{th} instance of feature extraction is input information of an (i+1)^{th} instance of feature extraction, that is, a next instance of feature extraction is feature extraction performed on information outputted in a previous instance of feature extraction, i being a positive integer less than N.

To enable the first feature to highlight the time domain feature of the sample voice information, first M instances of feature extraction in the N instances of feature extraction are feature extraction performed based on the time domain information corresponding to the sample voice information, and last N-M instances of feature extraction are feature extraction performed based on the frequency domain information corresponding to the sample voice information, M being a positive integer less than N. Such feature extraction has the advantage that because the first M instances of feature extraction are feature extraction performed based on complete sample voice information, performing feature extraction based on the time domain information first can keep the time domain feature corresponding to the sample voice information to the greatest extent. The subsequent N-M instances of feature extraction are feature extraction performed, based on the frequency domain information, on information obtained through the first M instances of feature extraction, so that although feature extraction cannot be performed based on complete frequency domain information, the first feature is extracted by considering both the frequency domain information and the time domain information.

Similarly, when extracting, based on the frequency domain information corresponding to the sample voice information, the second feature corresponding to the sample voice information, the computer device may determine, through P instances of feature extraction, the second feature corresponding to the sample voice information, P being a positive integer greater than 1. Output information of a k^{th} instance of feature extraction is input information of a (k+1)^{th} instance of feature extraction, first Q instances of feature extraction are feature extraction performed based on the frequency domain information corresponding to the sample voice information, and last P-Q instances of feature extraction are feature extraction performed based on the time domain information corresponding to the sample voice information, both k and Q being positive integers less than P. Because the first Q instances of feature extraction are feature extraction performed based on the complete sample voice information, performing feature extraction based on the frequency domain information first can keep the frequency domain feature corresponding to the sample voice information to the greatest extent. The subsequent P-Q instances of feature extraction are feature extraction performed based on the frequency domain information, on information obtained through the first Q instances of feature extraction, so that although feature extraction cannot be performed based on complete time domain information, the second feature is extracted by considering both the frequency domain information and the time domain information. It can be learned that although both the first feature and the second feature are extracted by considering feature information in the two dimensions of time domain and frequency domain, to some extent, the first feature can reflect the time domain feature of the sample voice information more accurately, and the second feature can reflect the frequency domain feature of the sample voice information more accurately. Therefore, a representation effect of the sample voice feature on a feature of each dimension is enhanced while appropriateness of feature extraction is ensured. In addition, in this application, fine-grained analysis on the sample voice information is implemented through a plurality of instances of feature extraction, so that attention can be paid to more information details in the sample voice information, improving voice feature extraction accuracy.

As described above, in last several instances of feature extraction in a plurality of instances of feature extraction, extraction is performed based on output information of first several instances of feature extraction. In some cases, if extraction is performed in each instance of feature extraction based on information of a single dimension, an information feature of a dimension cannot be completely extracted to some extent. For example, when the first feature is extracted, if the first M instances of feature extraction are feature extraction performed based on time domain information only, and do not consider the frequency domain information corresponding to the sample voice information, some frequency domain features corresponding to the sample voice information may be ignored. Although the last N-M instances of feature extraction are extraction performed based on the frequency domain information, feature extraction is performed based on output information of an M^{th} instance of feature extraction, so that a frequency domain information loss in the first M instances of feature extraction may not be recovered.

Based on this, in a possible implementation, to reduce an information loss caused by feature extraction to the sample voice information, the computer device may determine the sample voice feature by combining an overall information feature of the sample voice information.

The computer device may perform, by using the initial feature extraction module, one instance of feature extraction based on the time domain information and the frequency domain information corresponding to the sample voice information, to obtain a direct mapping feature corresponding to the sample voice information. Because this instance of feature extraction considers both the time domain information and the frequency domain information, and only one instance of feature extraction is performed, although a feature of a dimension in time domain or frequency domain cannot be significantly represented, an information feature of the sample voice information is kept to the largest extent, minimizing the information loss.

When determining, through the N instances of feature extraction, the first feature corresponding to the sample voice information, the computer device may determine, through the N instances of feature extraction, a first to-be-determined feature corresponding to the sample voice information. The first to-be-determined feature is an output of an N^{th} instance of feature extraction. Therefore, the first to-be-determined feature can represent the time domain feature more significantly. The computer device may merge the first to-be-determined feature and the direct mapping feature to obtain the first feature corresponding to the sample voice information. Therefore, when the first feature highlights the time domain feature of the sample voice information, the entire information feature of the sample voice information is considered, reducing a loss of the frequency domain feature in the information feature extraction process.

Similarly, when determining, through the P instances of feature extraction, the second feature corresponding to the sample voice information, the computer device may determine, through the P instances of feature extraction, a second to-be-determined feature corresponding to the sample voice information. The second to-be-determined feature is an output of a P^{th} instance of feature extraction. Therefore, the second to-be-determined feature can represent the frequency domain feature more significantly. The computer device may merge the second to-be-determined feature and the direct mapping feature to obtain the second feature corresponding to the sample voice information. Therefore, when the second feature highlights the frequency domain feature of the sample voice information, the entire information feature of the sample voice information is considered, reducing a loss of the time domain feature in the information feature extraction process.

In addition to the foregoing combination manner, the computer device may alternatively determine, by directly combining a plurality of features, the sample voice feature corresponding to the sample voice information.

Specifically, the computer device may determine, through T instances of feature extraction, a third feature corresponding to the sample voice information. A w^{th} instance of feature extraction is configured for performing feature extraction based on the time domain information and the frequency domain information corresponding to the sample voice information. T is a positive integer greater than 1, and w is a positive integer not greater than T. In other words, in this embodiment of this application, to extract an accurate overall feature corresponding to the sample voice information, a plurality of instances of feature extraction may be performed by combining the information of the two dimensions, to obtain the third feature. For example, the computer device may perform extraction during each instance of feature extraction by using a two-dimensional small convolution kernel, refining a feature analysis granularity while combining the information of the two dimensions. For the plurality of instances of feature extraction, a quantity of instances of feature extraction may be set based on an actual requirement, and is not limited herein.

When determining the sample voice feature based on the first feature and the second feature, the computer device may determine the sample voice feature based on the first feature, the second feature, and the third feature. Features of the sample voice information in time domain and frequency domain can be respectively highlighted by using the first feature and the second feature, and an overall feature of the sample voice information in the two information dimensions can be reflected by using the third feature. Therefore, representation of a single-dimensional feature and a multi-dimensional overall feature of the sample voice feature can be considered, improving a representation effect of the sample voice feature on the sample voice information, and facilitating subsequent accurate voice separation on the sample voice information based on the sample voice feature.

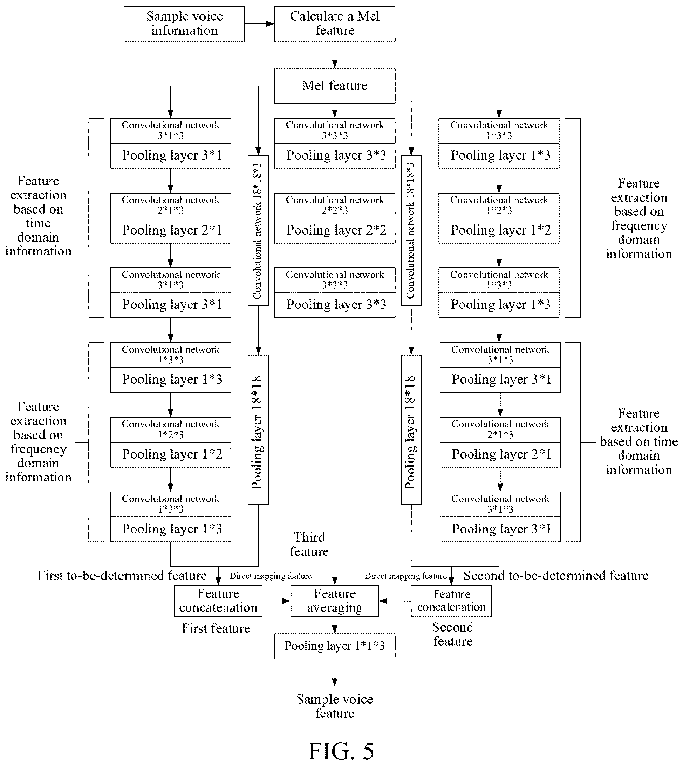

FIG. 5 is a schematic diagram of the initial feature extraction module according to an embodiment of this application. The module is divided into a total of three branches, including a left branch, a middle branch, and a right branch. Among the three branches, the left branch and the right branch each include a convolutional network including a one-dimensional small convolution kernel and a residual link, and the middle branch includes a convolutional network including a two-dimensional small convolution kernel. Then, for the three branches, feature merging is performed, and an average feature (mean) is calculated. Finally, the sample voice feature is obtained by using a large pooling layer, for example, may be an encoded feature map.

After the sample voice information is inputted, a Mel feature corresponding to the sample voice information is first calculated, and then, feature extraction is performed through the three branches. An upper part of the left branch is feature extraction based on the time domain information, that is, first three of six instances of feature extraction are one-dimensional convolution and one-dimensional pooling based on the time domain information, and then a lower part is feature extraction based on the frequency domain information, that is, last three instances of feature extraction are one-dimensional convolution and one-dimensional pooling in the frequency domain dimension. An architecture of the right branch is opposite to that of the left branch. An objective of this architecture is to enable one half of network layers to focus on perceptual learning on the time domain information, and enable the other half of network layers to focus on perceptual learning on the frequency domain information. In this way, a network can separately obtain detailed information in time domain and frequency domain. Then, the residual link is further added to each of the left and right branches. To be specific, the direct mapping feature corresponding to the sample voice information is extracted once by using a large convolution kernel and the large pooling layer, and is subjected to feature concatenation (concat) with a final result of the branch, for example, being separately concatenated with the first to-be-determined feature obtained on the left branch and the second to-be-determined feature obtained on the right branch, to obtain the first feature and the second feature. Therefore, the sample voice feature extracted by the model can combine the overall feature of the sample voice information at a bottom layer and a detailed feature obtained through a plurality of instances of feature extraction at a high layer.

The two-dimensional convolutional network including the two-dimensional small convolution kernel is used on the middle branch. Three instances of feature extraction are performed based on the time domain information and the frequency domain information by using the three-layer network, to obtain the third feature. Then, feature averaging is performed on features outputted by the three branches. Finally, a final sample voice feature output can be obtained by using a pooling layer on one channel.

Based on the voice separation model determined in the foregoing embodiment, this application further provides a model application method. The model application method may be applied to the voice separation model determined in any one of the foregoing embodiments.

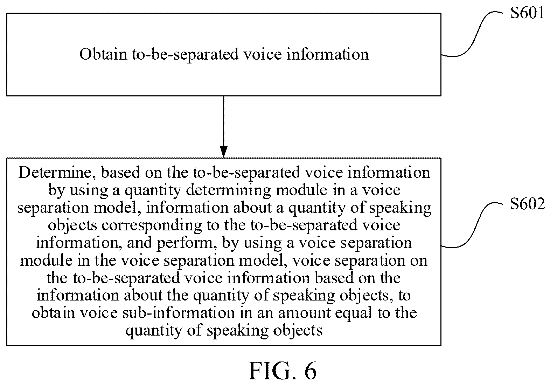

FIG. 6 is a flowchart of a model application method according to an embodiment of this application. In this embodiment, the method may be performed by a computer device. The method includes the following operations.

S601: Obtain to-be-separated voice information.

The to-be-separated voice information may be any piece of voice information on which voice separation needs to be performed. The to-be-separated voice information includes voice sub-information corresponding to a plurality of to-be-recognized speaking objects. In other words, the voice sub-information respectively corresponding to the plurality of to-be-recognized speaking objects can be received by using the to-be-separated voice information. For example, the to-be-separated voice information may be audio information corresponding to a movie, or a conference recording. The to-be-recognized speaking object may be a speaking object that needs to be distinguished in a model application process. The speaking object may be an actor in the movie, a speaker in a conference, or the like.

S602: Determine, based on the to-be-separated voice information by using a quantity determining module in a voice separation model, information about a quantity of speaking objects corresponding to the to-be-separated voice information, and perform, by using a voice separation module in the voice separation model, voice separation on the to-be-separated voice information based on the information about the quantity of speaking objects, to obtain voice sub-information in an amount equal to the quantity of speaking objects.

The voice sub-information in the amount equal to the quantity of speaking objects is a voice separation result corresponding to the to-be-separated voice information. The voice sub-information in the amount equal to the quantity of speaking objects is in one-to-one correspondence with the to-be-recognized speaking objects. The information about the quantity of speaking objects is configured for identifying the quantity of speaking objects corresponding to the to-be-separated voice information. The quantity determining module is a module determined by performing parameter adjustment on an initial quantity determining module in the foregoing manner. The voice separation module is a module determined by performing parameter adjustment on an initial voice separation module in the foregoing manner.

The method provided in this embodiment of this application may be applied to various scenarios in which voice separation needs to be performed, such as an authoring platform and a live-streaming platform. On the authoring platform, voices of speaking objects (that is, speakers) are separated from many materials in a massive movie and television drama material library, and then a user can select all script voice segments of one speaker according to preferences of the user. Therefore, there can be more clipping methods. For example, a highlight is made for one star. According to this embodiment of this application, aliased voice of the star and another star can be separated, to extract pure voice of the star.

On the live-streaming platform, when a plurality of live-streaming rooms on the live-streaming platform are connected, voices of a plurality of persons' voices are usually aliased, then live-streaming of live-streamers is usually recorded, and the live-streaming platform provides a voice separation function. It is difficult to accurately recognize aliased voice. In this embodiment of this application, recorded aliased voice can be separated, to separately perform voice recognition, thereby generating subtitles. This improves the experience in viewing a recorded video on the live-streaming platform.

As described above, a voice feature can represent a speaking object in a voice separation process. Similar to a model determining process, in the model application process, when determining the information about the quantity of speaking objects corresponding to the to-be-separated voice information, the computer device may determine voice sub-features in a quantity equal to the quantity of speaking objects corresponding to the to-be-separated voice information. The voice sub-features in the quantity equal to the quantity of speaking objects are in one-to-one correspondence with the to-be-recognized speaking objects. The voice sub-feature is configured for representing a voice feature of the corresponding to-be-recognized speaking object. For this capability of the model, because parameter adjustment is performed in the model determining process on the initial quantity determining module based on differences in a plurality of dimensions, so that the module can learn how to determine an accurate second voice sub-feature and accurately analyze count information corresponding to the second voice sub-feature, to accurately determine a voice sub-feature corresponding to a single speaking object.

When voice separation is performed on the to-be-separated voice information based on the information about the quantity of speaking objects by using the voice separation module in the voice separation model, to obtain the voice sub-information in the amount equal to the quantity of speaking objects, voice separation may be performed on the to-be-separated voice information by using the voice separation module based on the information about the quantity of speaking objects and the voice sub-features in the quantity equal to the quantity of speaking objects, to obtain voice information in an amount equal to the quantity of speaking objects, to determine the voice sub-information in the amount equal to the quantity of speaking objects corresponding to the to-be-separated voice information based on a limitation of the information about the quantity of speaking objects on an amount of voice information and a representation effect of a voice sub-feature on a to-be-recognized speaking object. By using the voice sub-features, the computer device may extract, from the to-be-separated voice information, voice information conforming to the voice sub-features, to obtain voice information corresponding to the to-be-recognized speaking objects represented by the voice sub-features. The voice separation model in the model application method may be a voice separation model determined by using any one of the foregoing model determining methods.

Different to-be-separated voice information may include different quantities of speaking objects. In this application, voice separation procedures for all speaking objects are the same, that is, parameters of models required for voice separation for all the speaking objects are the same. Based on this, in a possible implementation, the computer device may separate, in a parallel processing manner, voice information respectively corresponding to a plurality of speaking objects.

When performing, by using the voice separation module, voice separation on the to-be-separated voice information based on the information about the quantity of speaking objects and the voice sub-features in the quantity equal to the quantity of speaking objects, to obtain the voice sub-information in the amount equal to the quantity of speaking objects, the computer device may form separation sub-modules in a quantity equal to the quantity of speaking objects based on a model parameter corresponding to the voice separation module and the information about the quantity of speaking objects. The separation sub-modules in the quantity equal to the quantity of speaking objects correspond to a same model parameter, which is a model parameter determined based on the model parameter of the voice separation module. The separation sub-modules in the quantity equal to the quantity of speaking objects are in one-to-one correspondence with the voice sub-features in the quantity equal to the quantity of speaking objects, that is, each separation sub-module is configured to separate, from the to-be-separated voice information, the voice information corresponding to the speaking object represented by the corresponding voice sub-feature. Therefore, in a voice separation process, the voice information corresponding to the plurality of speaking objects may be synchronously separated, without waiting to separate voice information of a next speaking object after voice information corresponding to one speaking object is separated. This improves voice separation efficiency.

The computer device may use each of the separation sub-modules in the quantity equal to the quantity of speaking objects as a current sub-module, and separate, by using the current sub-module, voice sub-information corresponding to a to-be-recognized speaking object from the to-be-separated voice information based on the voice sub-feature corresponding to the current sub-module and a voice feature of the to-be-separated voice information. The voice sub-information is voice information conforming to the voice sub-feature. The to-be-recognized speaking object is a speaking object represented by the voice sub-feature.

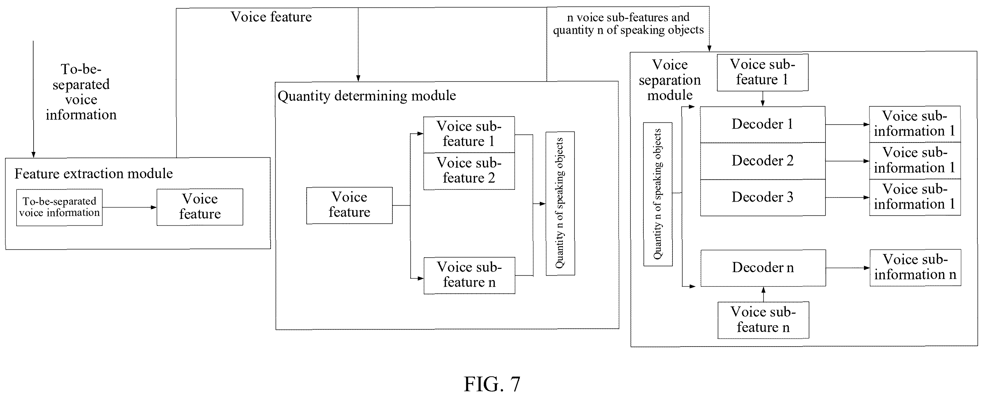

FIG. 7 is a schematic diagram of a model application method according to an embodiment of this application. A voice separation model may include an initial feature extraction module, a quantity determining module, and a voice separation module. The initial feature extraction module may determine a voice feature corresponding to to-be-separated voice information inputted to the model. The quantity determining module can determine n voice sub-features corresponding to the voice feature and a quantity n of speaking objects. The n voice sub-features are in one-to-one correspondence with the speaking objects. The quantity determining module may input the information to the voice separation module. The voice separation module constructs n separation sub-modules, that is, n decoders, based on the quantity n of speaking objects. Each decoder corresponds to one voice sub-feature. The decoder may separate corresponding voice sub-information based on the corresponding voice sub-feature and a voice feature of the to-be-separated voice information, to obtain n pieces of voice sub-information. The n pieces of voice sub-information are in one-to-one correspondence with the n speaking objects, that is, are a separation result of the to-be-separated voice information.

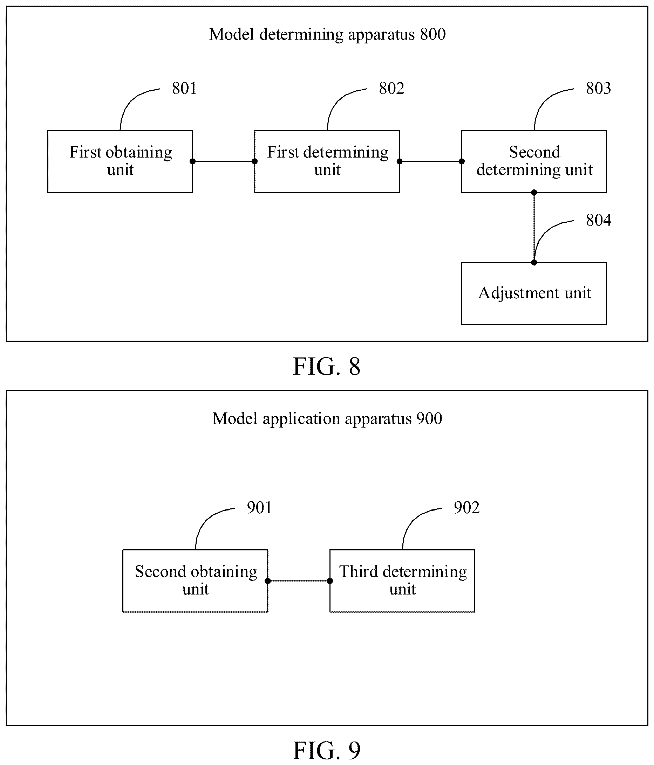

Based on the model determining method provided in the foregoing embodiments, this application further provides a model determining apparatus. FIG. 8 is a block diagram of a structure of a model determining apparatus according to an embodiment of this application. The apparatus 800 includes a first obtaining unit 801, a first determining unit 802, a second determining unit 803, and an adjustment unit 804.

The first obtaining unit 801 is configured to obtain a sample information set, the sample information set including a plurality of pieces of sample voice information, each of the plurality of pieces of sample voice information having a plurality of pieces of corresponding sample voice sub-information, and each piece of sample voice sub-information being in one-to-one correspondence with a sample speaking object.

The first determining unit 802 is configured to: determine, for each of the plurality of pieces of sample voice information by using an initial quantity determining module in an initial voice separation model, information about a to-be-determined quantity of speaking objects corresponding to the sample voice information, and perform, by using an initial voice separation module in the initial voice separation model, voice separation on the sample voice information based on the information about the to-be-determined quantity of speaking objects, to obtain a plurality of pieces of first voice information.

The second determining unit 803 is configured to determine, based on the plurality of pieces of sample voice sub-information that the sample voice information has, information about an actual quantity of speaking objects corresponding to the sample voice information.

The adjustment unit 804 is configured to adjust, based on a difference between the information about the to-be-determined quantity of speaking objects and the information about the actual quantity of speaking objects and based on a difference between the plurality of pieces of sample voice sub-information that the sample voice information has and the plurality of pieces of first voice information, a model parameter corresponding to the initial voice separation model, to obtain a voice separation model, the voice separation model being configured for performing voice separation on to-be-separated voice information to obtain a plurality of pieces of corresponding voice sub-information, and each piece of voice sub-information being in one-to-one correspondence with a to-be-recognized speaking object.

In a possible implementation, the first determining unit 802 is specifically configured to:
determine a plurality of second voice sub-features corresponding to the sample voice information;
determine a plurality of second voice sub-features corresponding to the sample voice information;
determine, based on the plurality of second voice sub-features, to-be-determined count information corresponding to each of the plurality of second voice sub-features, the to-be-determined count information being configured for identifying a probability that the corresponding second voice sub-feature corresponds to a single sample speaking object; and
determine the to-be-determined count information corresponding to each of the plurality of second voice sub-features as the information about the to-be-determined quantity of speaking objects, the information about the to-be-determined quantity of speaking objects being configured for identifying a quantity of second voice sub-features corresponding to a single sample speaking object.

The second determining unit 803 is specifically configured to:
determine second voice sub-information corresponding to each of the plurality of second voice sub-features;
determine, for each of the plurality of pieces of second voice sub-information, a maximum value among respectively corresponding similarities between the second voice sub-information and the plurality of pieces of sample voice sub-information as actual count information corresponding to the second voice sub-information; and
determine the actual count information corresponding to each of the plurality of second voice sub-features as the information about the actual quantity of speaking objects.

The adjustment unit 804 is specifically configured to:
adjust, for each of the plurality of second voice sub-features based on a difference between the to-be-determined count information and the actual count information corresponding to the second voice sub-feature, a model parameter corresponding to the initial quantity determining module; and
adjust, based on the difference between the plurality of pieces of sample voice sub-information that the sample voice information has and the plurality of pieces of first voice information, the model parameter corresponding to the initial voice separation model.

In a possible implementation, the first determining unit 802 is specifically configured to:
determine, among the plurality of second voice sub-features, a quantity of second voice sub-features whose probabilities identified by corresponding to-be-determined count information are greater than a first threshold as the to-be-determined quantity of speaking objects; and
perform voice separation on the sample voice information based on the to-be-determined quantity of speaking objects, to obtain first voice information in an amount equal to the to-be-determined quantity of speaking objects.

In a possible implementation, the adjustment unit 804 is specifically configured to:
adjust, based on a difference between the second voice sub-information corresponding to the second voice sub-feature and target voice sub-information and the difference between the to-be-determined count information and the actual count information corresponding to the second voice sub-feature, the model parameter corresponding to the initial quantity determining module, the target voice sub-information being sample voice sub-information whose similarity with the second voice sub-information corresponding to the second voice sub-feature is maximum among the plurality of pieces of sample voice sub-information.

In a possible implementation, the first determining unit 802 is specifically configured to:
determine a plurality of second voice sub-features corresponding to the sample voice information;
determine, based on the plurality of second voice sub-features, the information about the to-be-determined quantity of speaking objects corresponding to the sample voice information, the information about the to-be-determined quantity of speaking objects being configured for identifying a plurality of standard features corresponding to a single sample speaking object among the plurality of second voice sub-features; and
use each of the plurality of standard features as a current standard feature, and determine, based on the current standard feature and the sample voice information, first voice information corresponding to the current standard feature, the first voice information corresponding to the current standard feature being voice information corresponding to a sample speaking object corresponding to the current standard feature.

In a possible implementation, the first determining unit 802 is specifically configured to:
determine a sample voice feature corresponding to the sample voice information;
extract a first voice sub-feature corresponding to the current standard feature from the sample voice feature based on the current standard feature, a similarity between the first voice sub-feature and the current standard feature being greater than a second threshold; and
determine, based on the first voice sub-feature corresponding to the current standard feature, the first voice information corresponding to the current standard feature.

In a possible implementation, the first determining unit 802 is specifically configured to:
use first voice sub-features respectively corresponding to remaining standard features among the plurality of standard features as a plurality of comparison voice sub-features, and extract, based on the plurality of comparison voice sub-features, a first voice feature corresponding to the current standard feature from the first voice sub-feature corresponding to the current standard feature, the first voice feature being a first voice sub-feature whose similarities with the plurality of comparison voice sub-features are all less than a third threshold, and the remaining standard features being standard features among the plurality of standard features other than the current standard feature; and
determine, based on the first voice feature corresponding to the current standard feature, the first voice information corresponding to the current standard feature.

In a possible implementation, the apparatus is further configured to:
extract, based on the current standard feature, a second voice feature corresponding to the current standard feature from the first voice sub-feature corresponding to the current standard feature, the second voice feature being a first voice sub-feature whose similarity with the current standard feature is greater than a fourth threshold, and the fourth threshold being greater than the second threshold.

The first determining unit 802 is specifically configured to:
fuse the first voice feature corresponding to the current standard feature with the second voice feature corresponding to the current standard feature, to generate a voice feature corresponding to the current standard feature; and
determine, based on the voice feature corresponding to the current standard feature, the first voice information corresponding to the current standard feature.

In a possible implementation, the initial voice separation model further includes an initial feature extraction module. The apparatus is further configured to:
extract, by using the initial feature extraction module, a sample voice feature corresponding to the sample voice information.

The first determining unit 802 is specifically configured to:
determine, based on the sample voice feature by using the initial quantity determining module in the initial voice separation model, the information about the to-be-determined quantity of speaking objects corresponding to the sample voice information, and perform, by using the initial voice separation module in the initial voice separation model, voice separation on the sample voice information based on the information about the to-be-determined quantity of speaking objects and the sample voice feature, to obtain the plurality of pieces of first voice information.

In a possible implementation, the extracting, by using the initial feature extraction module, a sample voice feature corresponding to the sample voice information includes:
extracting, based on time domain information corresponding to the sample voice information, a first feature corresponding to the sample voice information, and extracting, based on frequency domain information corresponding to the sample voice information, a second feature corresponding to the sample voice information; and
determining the sample voice feature based on the first feature and the second feature.

In a possible implementation, the determining, based on time domain information corresponding to the sample voice information, a first feature corresponding to the sample voice information includes:
determining, through N instances of feature extraction, the first feature corresponding to the sample voice information, output information of an i^{th} instance of feature extraction being input information of an (i+1)^{th} instance of feature extraction, first M instances of feature extraction being feature extraction performed based on the time domain information corresponding to the sample voice information, last N-M instances of feature extraction being feature extraction performed based on the frequency domain information corresponding to the sample voice information, N being a positive integer greater than 1, and M and i being positive integers less than N.

The determining, based on frequency domain information corresponding to the sample voice information, a second feature corresponding to the sample voice information includes:
determining, through P instances of feature extraction, the second feature corresponding to the sample voice information, output information of a k^{th} instance of feature extraction being input information of a (k+1)^{th} instance of feature extraction, first Q instances of feature extraction being feature extraction performed based on the frequency domain information corresponding to the sample voice information, last P-Q instances of feature extraction being feature extraction performed based on the time domain information corresponding to the sample voice information, P being a positive integer greater than 1, and k and Q being positive integers less than P.

In a possible implementation, the apparatus is further configured to:
perform, by using the initial feature extraction module, one instance of feature extraction based on the time domain information and the frequency domain information corresponding to the sample voice information, to obtain a direct mapping feature corresponding to the sample voice information.

The determining, through N instances of feature extraction, the first feature corresponding to the sample voice information includes:
determining, through the N instances of feature extraction, a first to-be-determined feature corresponding to the sample voice information, the first to-be-determined feature being an output of an N^{th} instance of feature extraction; and
merging the first to-be-determined feature and the direct mapping feature to obtain the first feature corresponding to the sample voice information.

The determining, through P instances of feature extraction, the second feature corresponding to the sample voice information includes:
determining, through the P instances of feature extraction, a second to-be-determined feature corresponding to the sample voice information, the second to-be-determined feature being an output of a P^{th} instance of feature extraction; and
merging the second to-be-determined feature and the direct mapping feature to obtain the second feature corresponding to the sample voice information.

In a possible implementation, the apparatus is further configured to:
determine, through T instances of feature extraction, a third feature corresponding to the sample voice information, a w^{th} instance of feature extraction being configured for performing feature extraction based on the time domain information and the frequency domain information corresponding to the sample voice information.

The determining the sample voice feature based on the first feature and the second feature includes:
determining the sample voice feature based on the first feature, the second feature, and the third feature, T being a positive integer greater than 1, and w being a positive integer not greater than T.

Based on the model application method provided in the foregoing embodiments, this application further provides a model application apparatus. FIG. 9 is a block diagram of a structure of a model application apparatus according to an embodiment of this application. The apparatus 900 includes a second obtaining unit 901 and a third determining unit 902.

The second obtaining unit 901 is configured to obtain to-be-separated voice information, the to-be-separated voice information including voice sub-information corresponding to a plurality of to-be-recognized speaking objects.

The third determining unit 902 is configured to: perform, based on the to-be-separated voice information by using a quantity determining module in a voice separation model, information about a quantity of speaking objects corresponding to the to-be-separated voice information, and perform, by using a voice separation module in the voice separation model, voice separation on the to-be-separated voice information based on the information about the quantity of speaking objects, to obtain voice sub-information in an amount equal to the quantity of speaking objects, the voice sub-information in the amount equal to the quantity of speaking objects being in one-to-one correspondence with the to-be-recognized speaking objects, the information about the quantity of speaking objects being configured for identifying the quantity of speaking objects corresponding to the to-be-separated voice information, and the voice separation model being determined according to the model determining method provided in the foregoing embodiments.

In a possible implementation, the third determining unit 902 is specifically configured to:
determine voice sub-features in a quantity equal to the quantity of speaking objects corresponding to the to-be-separated voice information, the voice sub-features in the quantity equal to the quantity of speaking objects being in one-to-one correspondence with the to-be-recognized speaking objects, and the voice sub-feature being configured for representing a voice feature of the corresponding to-be-recognized speaking object; and
perform, by using the voice separation module, voice separation on the to-be-separated voice information based on the information about the quantity of speaking objects and the voice sub-features in the quantity equal to the quantity of speaking objects, to obtain the voice sub-information in the amount equal to the quantity of speaking objects.

In a possible implementation, the third determining unit 902 is specifically configured to:
form separation sub-modules in a quantity equal to the quantity of speaking objects based on a model parameter corresponding to the voice separation module and the information about the quantity of speaking objects, the separation sub-modules in the quantity equal to the quantity of speaking objects corresponding to a same model parameter, and the separation sub-modules in the quantity equal to the quantity of speaking objects being in one-to-one correspondence with the voice sub-features in the quantity equal to the quantity of speaking objects; and
use each of the separation sub-modules in the quantity equal to the quantity of speaking objects as a current sub-module, and separate, by using the current sub-module, voice sub-information corresponding to a to-be-recognized speaking object from the to-be-separated voice information based on the voice sub-feature corresponding to the current sub-module and a voice feature of the to-be-separated voice information.

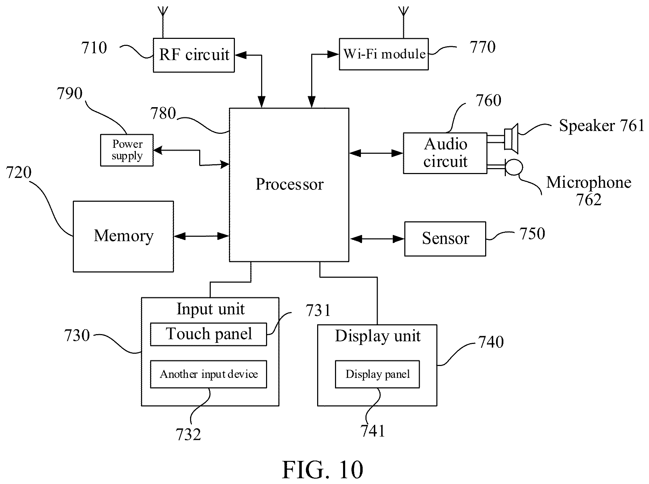

An embodiment of this application further provides a computer device. As shown in FIG. 10, the computer device may be a terminal device. An example in which the terminal device is a mobile phone is used.

FIG. 10 is a block diagram of a partial structure of a mobile phone related to the terminal device provided in this embodiment of this application. Refer to FIG. 10. The mobile phone includes a radio frequency (RF for short) circuit 710, a memory 720, an input unit 730, a display unit 740, a sensor 750, an audio circuit 760, a wireless fidelity (Wi-Fi for short) module 770, a processor 780, a power supply 790, and another component. The input unit 730 may include a touch panel 731 and another input device 732. The display unit 740 may include a display panel 741. The audio circuit 760 may include a speaker 761 and a microphone 762. The structure of the mobile phone shown in FIG. 10 does not constitute a limitation on the mobile phone, and may include more or fewer components than those shown in the figure, combine some components, or have different component arrangements.

The memory 720 may be configured to store a software program and a module. The processor 780 runs the software program and the module stored in the memory 720, to implement various functional applications and data processing of the mobile phone. The memory 720 may mainly include a program storage area and a data storage area. The program storage area may store an operating system, an application required for at least one function (for example, a sound playback function and an image playback function), and the like. The data storage area may store data (for example, audio data and a phone book) created based on use of the mobile phone, and the like. In addition, the memory 720 may include a high-speed random access memory, and may further include a non-volatile memory, for example, at least one disk storage device, a flash memory device, or another volatile solid-state storage device.

The processor 780 is a control center of the mobile phone, and is connected to various parts of the entire mobile phone through various interfaces and lines. By running or executing the software program and/or the module stored in the memory 720, and invoking the data stored in the memory 720, the processor executes various functions of the mobile phone and performs data processing, thereby detecting the entire mobile phone. In some embodiments, the processor 780 may include one or more processing units. Preferably, the processor 780 may integrate an application processor and a modem processor. The application processor mainly processes the operating system, a user interface, the application, and the like. The modem processor mainly processes wireless communication. The modem processor may alternatively not be integrated into the processor 780.

Although not shown, the mobile phone may further include a camera, a Bluetooth module, and the like, which are not described in detail herein.

In this embodiment, the processor 780 included in the terminal device further has any one of the foregoing model determining functions or model application functions.

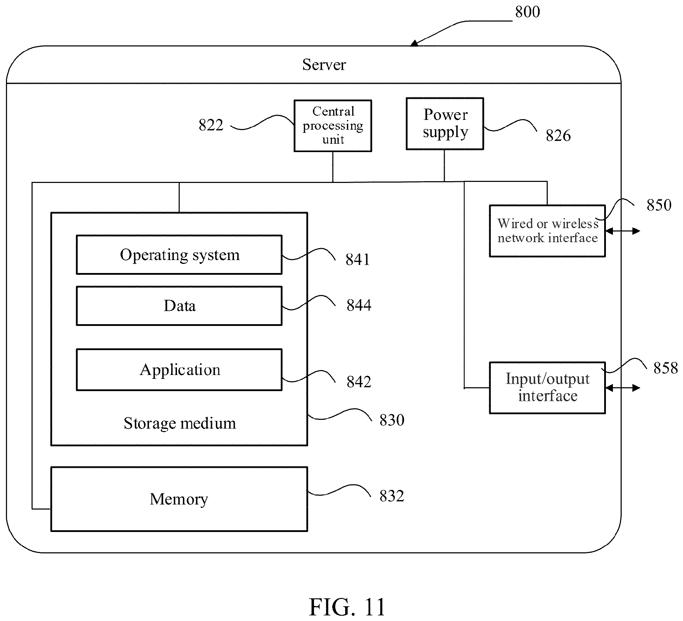

An embodiment of this application further provides a server. FIG. 11 is a diagram of a structure of a server 800 according to an embodiment of this application. The server 800 may vary greatly due to different configurations or performance, and may include one or more central processing units (CPUs for short) 822 (for example, one or more processors), a memory 832, and one or more storage media 830 (for example, one or more mass storage devices) that store an application 842 or data 844. The memory 832 and the storage medium 830 may be transient or persistent storage. A program stored in the storage medium 830 may include one or more modules (not shown in the figure), and each module may include a series of instruction operations on the server. Further, the central processing unit 822 may be configured to communicate with the storage medium 830, and perform, on the server 800, the series of instruction operations in the storage medium 830.

The server 800 may further include one or more power supplies 826, one or more wired or wireless network interfaces 850, one or more input/output interfaces 858, and/or one or more operating systems 841, such as Windows Server^{™}, Mac OS X^{™}, UnixTM, Linux^{™}, and FreeBSD^{™}.

Operations performed by the server in the foregoing embodiment may be based on the structure of the server shown in FIG. 11.

An embodiment of this application further provides a computer-readable storage medium, configured to store a computer program. The computer program is configured to perform any one of the implementations of the model determining method or the model application method according to the foregoing embodiments.

An embodiment of this application further provides a computer program product including a computer program. When the computer program product is run on a computer device, the computer device is caused to perform the model determining method or the model application method according to any one of the foregoing embodiments.

Relevant data such as object information (for example, voice information) is involved in a specific implementation of this application. When the foregoing embodiments of this application are applied to a specific product or technology, a license or consent of an object is required to be obtained, and collection, use, and processing of the related data are required to comply with related laws and regulations and standards of related countries and regions.

All or some of the operations in the method embodiments may be implemented by hardware related to program instructions. The program may be stored in a computer-readable storage medium. When the program is executed, the operations of the method embodiments are performed. The above storage medium may be at least one of the following: various media capable of storing program code, such as a read-only memory (ROM), a RAM, a magnetic disk, or an optical disc.

The embodiments of this specification are all described in a progressive manner, for same or similar parts in the embodiments, refer to these embodiments, and descriptions of each embodiment focus on a difference from other embodiments. Especially, device and system embodiments are basically similar to the method embodiments, and therefore are described briefly; and for related parts, reference may be made to partial descriptions in the method embodiments. The described device and system embodiments are merely exemplary. The units described as separate parts may or may not be physically separated, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments without creative efforts.

The foregoing descriptions are merely a specific implementation of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model determining method, performed by a computer device, the method comprising:
obtaining a sample information set, the sample information set comprising a plurality of pieces of sample voice information, each of the plurality of pieces of sample voice information comprising at least one piece of sample voice sub-information, and each piece of sample voice sub-information being in one-to-one correspondence with a sample speaking object;
for each of the plurality of pieces of sample voice information, determining, by using an initial quantity-determining module of an initial voice-separation model, information about an initial quantity of sample speaking objects corresponding to the sample voice information, and performing, by using an initial voice-separation module of the initial voice-separation model, voice separation on the sample voice information based on the information about the initial quantity of sample speaking objects, to obtain at least one piece of first voice information;
for each of the plurality of pieces of sample voice information, determining, based on the at least one piece of sample voice sub-information comprised in the sample voice information, information about a reference quantity of sample speaking objects corresponding to the sample voice information; and
for each of the plurality of pieces of sample voice information, adjusting, based on a difference between the information about the initial quantity of sample speaking objects and the information about the reference quantity of sample speaking objects and based on a difference between the at least one piece of sample voice sub-information comprised in the sample voice information and the at least one piece of first voice information, a model parameter corresponding to the initial voice separation model, to obtain an adjusted voice separation model, the voice separation model being configured for performing voice separation on to-be-separated voice information to obtain at least one piece of corresponding voice sub-information, and each piece of voice sub-information being in one-to-one correspondence with a to-be-recognized speaking object.

2. The method according to claim 1, wherein the determining information about an initial quantity of sample speaking objects corresponding to the sample voice information comprises:
determining a plurality of second voice sub-features corresponding to the sample voice information;
determining, based on the plurality of second voice sub-features, a plurality pieces of to-be-determined count information each corresponding to one of the plurality of second voice sub-features, each piece of to-be-determined count information being configured for identifying a probability that a corresponding second voice sub-feature corresponds to a single sample speaking object; and
determining each piece of the plurality pieces of to-be-determined count information corresponding to one of the plurality of second voice sub-features as the information about the initial quantity of sample speaking objects, the information about an initial quantity of sample speaking objects being configured for identifying an initial quantity of second voice sub-features corresponding to a single sample speaking object;
the determining, based on the at least one piece of sample voice sub-information comprised in the sample voice information, information about a reference quantity of sample speaking objects corresponding to the sample voice information comprises:
determining second voice sub-information corresponding to each of the plurality of second voice sub-features;
determining, for each of the plurality of pieces of second voice sub-information, a maximum of similarities each being a similarity between the second voice sub-information and each sample voice sub-information as actual count information corresponding to the second voice sub-information; and
determining the actual count information corresponding to each of the plurality of second voice sub-features as the information about the reference quantity of sample speaking objects; and
the for each of the plurality of pieces of sample voice information, adjusting, based on a difference between the information about the initial quantity of sample speaking objects and the information about the reference quantity of sample speaking objects and based on a difference between the at least one piece of sample voice sub-information comprised in the sample voice information and the at least one piece of first voice information, a model parameter corresponding to the initial voice separation model comprises:
adjusting, for each of the plurality of second voice sub-features based on a difference between the to-be-determined count information and the actual count information corresponding to the second voice sub-feature, a model parameter corresponding to the initial quantity-determining module; and
adjusting, based on the difference between the at least one piece of sample voice sub-information comprised in the sample voice information and the at least one piece of first voice information, the model parameter corresponding to the initial voice separation model.

3. The method according to claim 2, wherein the performing, by using an initial voice-separation module of the initial voice-separation model, voice separation on the sample voice information based on the information about the initial quantity of sample speaking objects, to obtain at least one piece of first voice information comprises:
determining, among the plurality of second voice sub-features, a quantity of second voice sub-features each with a probability identified by a corresponding piece of to-be-determined count information being greater than a first threshold as the initial quantity of sample speaking objects; and
performing voice separation on the sample voice information based on the initial quantity of sample speaking objects, to obtain the initial quantity pieces of first voice information.

4. The method according to claim 2, wherein the adjusting, for each of the plurality of second voice sub-features based on a difference between the to-be-determined count information and the actual count information corresponding to the second voice sub-feature, a model parameter corresponding to the initial quantity-determining module comprises:
adjusting, for each of the plurality of second voice sub-features based on a difference between a corresponding piece of second voice sub-information of the second voice sub-feature and target voice sub-information and the difference between the to-be-determined count information and the actual count information corresponding to the second voice sub-feature, the model parameter corresponding to the initial quantity-determining module, the target voice sub-information being a piece of sample voice sub-information having a maximum similarity with the corresponding piece of second voice sub-information of the second voice sub-feature among the at least one piece of sample voice sub-information.

5. The method according to claim 1, wherein the determining information about an initial quantity of sample speaking objects corresponding to the sample voice information comprises:
determining a plurality of second voice sub-features corresponding to the sample voice information; and
determining, based on the plurality of second voice sub-features, the information about the initial quantity of sample speaking objects corresponding to the sample voice information, the information about the initial quantity of sample speaking objects being configured for identifying a plurality of standard features corresponding to a single sample speaking object among the plurality of second voice sub-features; and
the performing, by using an initial voice-separation module of the initial voice-separation model, voice separation on the sample voice information based on the information about the initial quantity of sample speaking objects, to obtain at least one piece of first voice information comprises:
for each standard feature of the plurality of standard features, using the standard feature as a current standard feature, and determining, based on the current standard feature and the sample voice information, a corresponding piece of first voice information of the current standard feature, the corresponding piece of first voice information of the current standard feature being voice information of a sample speaking object corresponding to the current standard feature.

6. The method according to claim 5, wherein the determining, based on the current standard feature and the sample voice information, a corresponding piece of first voice information of the current standard feature comprises:
determining a sample voice feature corresponding to the sample voice information;
extracting a first voice sub-feature corresponding to the current standard feature from the sample voice feature based on the current standard feature, a similarity between the first voice sub-feature and the current standard feature being greater than a second threshold; and
determining, based on the first voice sub-feature corresponding to the current standard feature, the corresponding piece of first voice information of the current standard feature.

7. The method according to claim 6, wherein the determining, based on the first voice sub-feature corresponding to the current standard feature, the corresponding piece of first voice information of the current standard feature comprises:
using first voice sub-features respectively corresponding to remaining standard features among the plurality of standard features as a plurality of comparison voice sub-features, and extracting, based on the plurality of comparison voice sub-features, a first voice feature corresponding to the current standard feature from the first voice sub-feature corresponding to the current standard feature, the first voice feature being a first voice sub-feature of which a similarity with each the plurality of comparison voice sub-features is less than a third threshold, and the remaining standard features being standard features among the plurality of standard features other than the current standard feature; and
determining, based on the first voice feature corresponding to the current standard feature, the corresponding piece of first voice information of the current standard feature.

8. The method according to claim 7, wherein the method further comprises:
extracting, based on the current standard feature, a second voice feature corresponding to the current standard feature from the first voice sub-feature corresponding to the current standard feature, the second voice feature being a first voice sub-feature of which a similarity with the current standard feature is greater than a fourth threshold, and the fourth threshold being greater than the second threshold; and
the determining, based on the first voice feature corresponding to the current standard feature, the corresponding piece of first voice information of the current standard feature comprises:
fusing the first voice feature corresponding to the current standard feature with the second voice feature corresponding to the current standard feature, to generate a voice feature corresponding to the current standard feature; and
determining, based on the voice feature corresponding to the current standard feature, the corresponding piece of first voice information corresponding to the current standard feature.

9. The method according to claim 1, wherein the initial voice separation model further comprises an initial feature-extraction module, and the method further comprises:
extracting, by using the initial feature-extraction module, a sample voice feature corresponding to the sample voice information; and
the determining, by using an initial quantity-determining module of an initial voice-separation model, information about an initial quantity of sample speaking objects corresponding to the sample voice information, and performing, by using an initial voice-separation module of the initial voice-separation model, voice separation on the sample voice information based on the information about the initial quantity of sample speaking objects, to obtain at least one piece of first voice information comprises:
determining, based on the sample voice feature by using the initial quantity-determining module of the initial voice separation model, the information about the initial of sample speaking objects corresponding to the sample voice information, and performing, by using the initial voice-separation module of the initial voice separation model, voice separation on the sample voice information based on the information about the initial quantity of sample speaking objects and the sample voice feature, to obtain the at least one piece of first voice information.

10. The method according to claim 9, wherein the extracting, by using the initial feature-extraction module, a sample voice feature corresponding to the sample voice information comprises:
extracting, based on time domain information corresponding to the sample voice information, a first feature corresponding to the sample voice information, and extracting, based on frequency domain information corresponding to the sample voice information, a second feature corresponding to the sample voice information; and
determining the sample voice feature based on the first feature and the second feature.

11. The method according to claim 10, wherein the determining, based on time domain information corresponding to the sample voice information, a first feature corresponding to the sample voice information comprises:
determining, through N feature extractions, the first feature corresponding to the sample voice information, output information of an i^{th} feature extraction being input information of an (i+1)^{th} feature extraction, first M feature extractions being feature extractions performed based on the time domain information corresponding to the sample voice information, last N-M feature extraction being feature extractions performed based on the frequency domain information corresponding to the sample voice information, N being a positive integer greater than 1, and M and i being positive integers less than N; and
the determining, based on frequency domain information corresponding to the sample voice information, a second feature corresponding to the sample voice information comprises:
determining, through P feature extractions, the second feature corresponding to the sample voice information, output information of a k^{th} feature extraction being input information of a (k+1)^{th} feature extraction, first Q feature extractions being feature extractions performed based on the frequency domain information corresponding to the sample voice information, last P-Q feature extractions being feature extractions performed based on the time domain information corresponding to the sample voice information, P being a positive integer greater than 1, and k and Q being positive integers less than N.

12. The method according to claim 11, wherein the method further comprises:
performing, by using the initial feature-extraction module, one feature extraction based on the time domain information and the frequency domain information corresponding to the sample voice information, to obtain a direct mapping feature corresponding to the sample voice information;
the determining, through N feature extractions, the first feature corresponding to the sample voice information comprises:
determining, through the N feature extractions, a first to-be-determined feature corresponding to the sample voice information, the first to-be-determined feature being an output of an N^{th} feature extraction; and
merging the first to-be-determined feature and the direct mapping feature to obtain the first feature corresponding to the sample voice information; and
the determining, through P feature extractions, the second feature corresponding to the sample voice information comprises:
determining, through the P feature extractions, a second to-be-determined feature corresponding to the sample voice information, the second to-be-determined feature being an output of a P^{th} feature extraction; and
merging the second to-be-determined feature and the direct mapping feature to obtain the second feature corresponding to the sample voice information.

13. The method according to claim 10, wherein the method further comprises:
determining, through T feature extractions, a third feature corresponding to the sample voice information, a w^{th} feature extraction being a feature extraction performed based on the time domain information and the frequency domain information corresponding to the sample voice information; and
the determining the sample voice feature based on the first feature and the second feature comprises:
determining the sample voice feature based on the first feature, the second feature, and the third feature, T being a positive integer greater than 1, and w being a positive integer not greater than T.

14. A model application method, performed by a computer device, the method comprising:
obtaining to-be-separated voice information, the to-be-separated voice information comprising voice sub-information corresponding to a plurality of to-be-recognized speaking objects; and
determining, based on the to-be-separated voice information by using a quantity-determining module of a voice separation model, information about a quantity of speaking objects corresponding to the to-be-separated voice information, and performing, by using a voice separation module of the voice separation model, voice separation on the to-be-separated voice information based on the information about the quantity of speaking objects, to obtain the quantity pieces of voice sub-information, the quantity pieces of voice sub-information being in one-to-one correspondence with the to-be-recognized speaking objects, the information about the quantity of speaking objects being configured for identifying the quantity of speaking objects corresponding to the to-be-separated voice information, and the voice separation model being determined by using the model determining method according to any one of claims 1 to 13.

15. The method according to claim 14, wherein the determining information about a quantity of speaking objects corresponding to the to-be-separated voice information comprises:
determining the quantity voice sub-features corresponding to the to-be-separated voice information, the quantity voice sub-features being in one-to-one correspondence with the to-be-recognized speaking objects, and a voice sub-feature being configured for representing a voice feature of a corresponding to-be-recognized speaking object; and
the performing, by using a voice separation module of the voice separation model, voice separation on the to-be-separated voice information based on the information about the quantity of speaking objects, to obtain the quantity pieces of voice sub-information comprises:
performing, by using the voice separation module, voice separation on the to-be-separated voice information based on the information about the quantity of speaking objects and the quantity of voice sub-features, to obtain the quantity pieces of voice sub-information.

16. The method according to claim 15, wherein the performing, by using the voice separation module, voice separation on the to-be-separated voice information based on the information about the quantity of speaking objects and the quantity of voice sub-features, to obtain the quantity pieces of voice sub-information comprises:
constructing the quantity of separation sub-modules based on a model parameter corresponding to the voice separation module and the information about the quantity of speaking objects, the quantity of separation sub-modules corresponding to a same model parameter, and the quantity of separation sub-modules being in one-to-one correspondence with the quantity of voice sub-features; and
using each of the quantity of separation sub-modules as a current sub-module, and separating, by using the current sub-module, voice sub-information corresponding to a to-be-recognized speaking object from the to-be-separated voice information based on a voice sub-feature corresponding to the current sub-module and a voice feature of the to-be-separated voice information.

17. A model determining apparatus, deployed on a computer device, the apparatus comprising a first obtaining unit, a first determining unit, a second determining unit, and an adjustment unit;
the first obtaining unit being configured to obtain a sample information set, the sample information set comprising a plurality of pieces of sample voice information, each of the plurality of pieces of sample voice information comprising at least one piece of sample voice sub-information, and each piece of sample voice sub-information being in one-to-one correspondence with a sample speaking object;
the first determining unit being configured to: for each of the plurality of pieces of sample voice information, determine, by using an initial quantity-determining module of an initial voice-separation model, information about an initial quantity of sample speaking objects corresponding to the sample voice information, and perform, by using an initial voice-separation module of the initial voice-separation model, voice separation on the sample voice information based on the information about the initial quantity of sample speaking objects, to obtain at least one piece of first voice information;
the second determining unit being configured to, for each of the plurality of pieces of sample voice information, determine, based on the at least one piece of sample voice sub-information comprised in the sample voice information, information about a reference quantity of sample speaking objects corresponding to the sample voice information; and
the adjustment unit being configured to: for each of the plurality of pieces of sample voice information, adjust, based on a difference between the information about the initial quantity of sample speaking objects and the information about the reference quantity of sample speaking objects and based on a difference between the at least one piece of sample voice sub-information comprised in the sample voice information and the at least one piece of first voice information, a model parameter corresponding to the initial voice separation model, to obtain an adjusted voice separation model, the voice separation model being configured for performing voice separation on to-be-separated voice information to obtain at least one piece of corresponding voice sub-information, and each piece of voice sub-information being in one-to-one correspondence with a to-be-recognized speaking object.

18. A model application apparatus, deployed on a computer device, the apparatus comprising a second obtaining unit and a third determining unit;
the second obtaining unit being configured to obtain to-be-separated voice information, the to-be-separated voice information comprising voice sub-information corresponding to a plurality of to-be-recognized speaking objects; and
the third determining unit being configured to: determine, based on the to-be-separated voice information by using a quantity-determining module of a voice separation model, information about a quantity of speaking objects corresponding to the to-be-separated voice information, and perform, by using a voice separation module of the voice separation model, voice separation on the to-be-separated voice information based on the information about the quantity of speaking objects, to obtain the quantity pieces of voice sub-information, the quantity pieces of voice sub-information being in one-to-one correspondence with the to-be-recognized speaking objects, the information about the quantity of speaking objects being configured for identifying the quantity of speaking objects corresponding to the to-be-separated voice information, and the voice separation model being determined by using the model determining method according to any one of claims 1 to 13.

19. A computer device, comprising a processor and a memory,
the memory being configured to: store a computer program, and transmit the computer program to the processor; and
the processor being configured to perform, according to instructions in the computer program, the model determining method according to any one of claims 1 to 13 or the model application method according to any one of claims 14 to 16.

20. A computer-readable storage medium, configured to store a computer program, the computer program being configured for performing the model determining method according to any one of claims 1 to 13 or the model application method according to any one of claims 14 to 16.

21. A computer program product, comprising a computer program, the computer program, when run on a computer, causing the computer to perform the model determining method according to any one of claims 1 to 13 or the model application method according to any one of claims 14 to 16.
